(19) Europäisches Patentamt / European Patent Office / Office européen des brevets

(11) **EP 3 968 223 B1**

(12) **EUROPEAN PATENT SPECIFICATION**

(45) Date of publication and mention of the grant of the patent:
**19.11.2025 Bulletin 2025/47**

(21) Application number: **20802490.1**

(22) Date of filing: **28.04.2020**

(51) International Patent Classification (IPC):
**G06T 7/246** (2017.01)    **G06N 3/088** (2023.01)
**G06N 3/045** (2023.01)

(52) Cooperative Patent Classification (CPC):
**G06T 7/248; G06N 3/045; G06N 3/0464;**
**G06N 3/088; G06N 3/0895;** G06T 2207/20081;
G06T 2207/20084

(86) International application number:
**PCT/CN2020/087361**

(87) International publication number:
**WO 2020/224479 (12.11.2020 Gazette 2020/46)**

(54) **METHOD AND APPARATUS FOR ACQUIRING POSITIONS OF TARGET, AND COMPUTER DEVICE AND STORAGE MEDIUM**

VERFAHREN UND VORRICHTUNG ZUR ERFASSUNG DER POSITIONEN EINES ZIELS SOWIE COMPUTERVORRICHTUNG UND SPEICHERMEDIUM

PROCÉDÉ ET APPAREIL D'ACQUISITION DE POSITIONS DE CIBLE, DISPOSITIF INFORMATIQUE, ET SUPPORT D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.05.2019 CN 201910371250**

(43) Date of publication of application:
**16.03.2022 Bulletin 2022/11**

(73) Proprietor: **Tencent Technology (Shenzhen) Company Limited**
**Shenzhen, Guangdong, 518057 (CN)**

(72) Inventors:
• **WANG, Ning**
**Shenzhen, Guangdong 518057 (CN)**
• **SONG, Yibing**
**Shenzhen, Guangdong 518057 (CN)**
• **LIU, Wei**
**Shenzhen, Guangdong 518057 (CN)**

(74) Representative: **Novagraaf International SA**
**Chemin de l'Echo 3**
**1213 Onex, Geneva (CH)**

(56) References cited:
WO-A1-2017/078886    WO-A1-2018/121841
CN-A- 107 492 113    CN-A- 108 734 109
CN-A- 109 584 276    CN-A- 109 635 657
CN-A- 110 110 787

## Description

FIELD

The present disclosure relates to the technical field of computers, and in particular, to a technology for obtaining a position of a target.

BACKGROUND

With the development of computer technologies, people can process images to obtain various analysis results. For example, multiple frames of images may be processed. The multiple frames of images may be processed according to a target determined in one frame of image, and positions of the target in other frames of images may be obtained, to track the target.

At present, in a method for obtaining a position of a target, a target is usually given in one frame of image, and multiple frames of images are processed based on a target tracking algorithm, to obtain positions of the target in the multiple frames of images. When the target tracking algorithm is trained by using sample images, a real position of a target needs to be annotated in each frame of sample image. According to the target tracking algorithm, calculation is performed on each frame of sample image to determine a predicted position of the target, and the target tracking algorithm is trained based on the predicted position of the target and the annotated real position of the target.

In the foregoing method for obtaining a position of a target, the real position of the target needs to be manually annotated in each frame of sample image, resulting in high labor costs and a cumbersome image processing process. Therefore, the efficiency of the above method for obtaining a position of a target is low.

According to WO2017/078886A1, a method of tracking a position of a target object in a video sequence includes identifying the target object in a reference frame. A generic mapping is applied to the target object being tracked. The generic mapping is generated by learning possible appearance variations of a generic object. The method also includes tracking the position of the target object in subsequent frames of the video sequence by determining whether an output of the generic mapping of the target object matches an output of the generic mapping of a candidate object.

CN109635657A relates to the technical field of computers, and provides a target tracking method and device, equipment and a storage medium. The method comprises the steps: calculating the Mahalanobis distance between each obtained original detection region and each obtained prediction target region; taking the original detection target corresponding to the Mahalanobis distance with the minimum value as a basic target to be evaluated; if the number of the to-be-evaluated basic targets is more than one, taking an original detection target in the previous frame of video image corresponding to the prediction tracking target as a to-be-processed target; performing depth feature extraction on each to-be-processed target to obtain a depth feature vector of each to-be-processed target; and matching the depth feature vector of each to-be-processed target in each frame of video image with the depth feature vector of each to-be-processed target in the next frame of video image to obtain a matching result corresponding to each to-be-processed target in each frame of video image, and completing target tracking according to the matching result. The accuracy of target tracking can be improved.

CN109584276A discloses a key point detection method, device and equipment and a readable medium. The method comprises the steps of obtaining a video frame sequence on which a user image is displayed; Inputting the template frame of the video frame sequence into a key point detection model to obtain position information of a plurality of key points; And inputting the target object comprising the plurality of key points in the template frame and the detection frame into the tracking model, detecting the target object in the detection frame, and obtaining the position information of the plurality of key points in the target object. According to the embodiment of the invention, the efficiency and accuracy of key point detection can be improved.

CN107492113A relates to a position prediction model training method, position prediction method and track prediction method for moving objects in video images. For the training of a moving object position prediction model, videos are firstly collected under a single fixed scene, multi-object tracking is carried out on the videos, a time series coordinate sequence of each object is generated, a time series coordinate sequence set of a single object class is screened, a real track sequence is input into a network model, output is repeatedly compared with real data to obtain a position prediction model of each single-class object, and in a practical video, a single-target class position prediction model corresponding to each object class is used for predicting future positions or tracks. In practical application, using scenes and training scenes need to be same or similar. By utilizing a deep learning method, a novel method is provided for predicting positions and tracks of moving objects in video images and the moving objects can comprise pedestrians, motor vehicles, non-motor vehicles and the like.

SUMMARY

The invention is set out in the appended set of claims.

BRIEF DESCRIPTION OF THE DRAWINGS

To describe the technical solutions in the embodiments of the present disclosure more clearly, the accompanying drawings required for describing the embodiments are described briefly hereinafter. Apparently, the accompanying drawings in the following description show merely some embodiments of the present disclosure, and a person of ordinary skill in the art may still derive other drawings from these accompanying drawings without creative efforts.

Figure 1 is a schematic diagram of an implementation environment of a method for obtaining a position of a target according to an embodiment of the present disclosure.

Figure 2 is a flowchart of a method for training a position obtaining model according to an embodiment of the present disclosure.

Figure 3 is a schematic diagram of a process of obtaining multiple frames of sample images according to an embodiment of the present disclosure.

Figure 4 is a schematic diagram of training data according to an embodiment of the present disclosure.

Figure 5 is a flowchart of training a position obtaining model according to an embodiment of the present disclosure.

Figure 6 is a diagram showing comparison of obtained different sample image sets according to an embodiment of the present disclosure.

Figure 7 is a flowchart of a method for obtaining a position of a target according to an embodiment of the present disclosure.

Figure 8 is a flowchart of a method for obtaining a position of a target according to an embodiment of the present disclosure.

Figure 9 is a schematic structural diagram of an apparatus for obtaining a position of a target according to an embodiment of the present disclosure.

Figure 10 is a schematic structural diagram of an apparatus for obtaining a position of a target according to an embodiment of the present disclosure.

Figure 11 is a schematic structural diagram of a terminal according to an embodiment of the present disclosure.

Figure 12 is a schematic structural diagram of a server according to an embodiment of the present disclosure.

DETAILED DESCRIPTION OF EMBODIMENTS

To make the objectives, technical solutions, and advantages of the present disclosure clearer, implementations of the present disclosure are described in detail with reference to the accompanying drawings hereinafter.

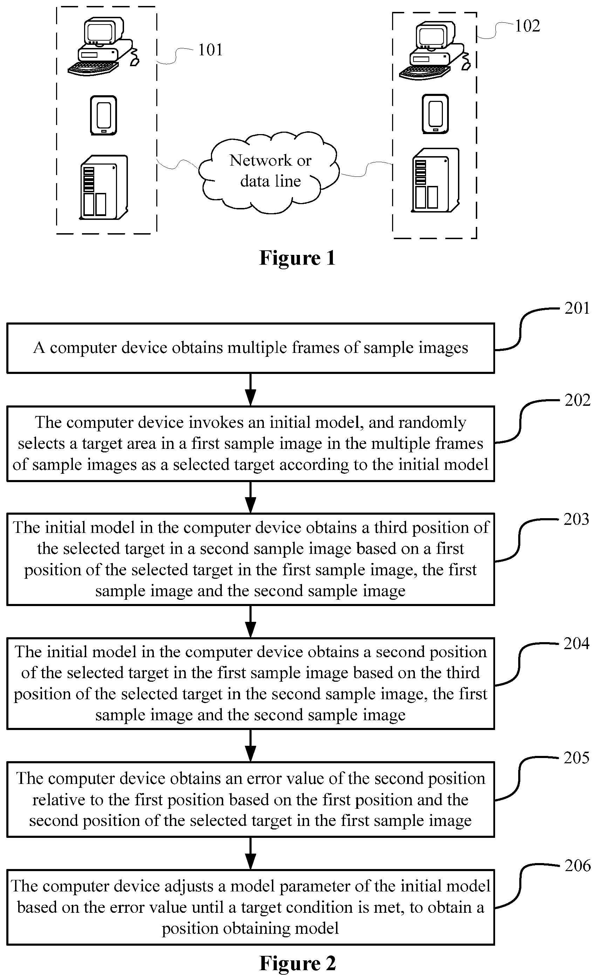

Figure 1 shows an implementation environment of a method for obtaining a position of a target according to an embodiment of the present disclosure. Referring to Figure 1, the implementation environment may include at least one computer device. The at least one computer device may implement data interaction in a wired connection manner or in a network connection manner. The interaction manner is not limited in the embodiment of the present disclosure.

In an implementation, the at least one computer device may include a computer device 101 and a computer device 102. The computer device 101 may be configured to process multiple frames of images, to obtain positions of a target in the multiple frames of images. The computer device 102 may be configured to acquire multiple frames of images or shoot a video, and send an acquired image or video to the computer device 101. The computer device 101 processes the image or video to track the target.

In another implementation, the at least one computer device may include only the computer device 101. The computer device may acquire multiple frames of images, shoot a video, or the like; process the acquired multiple frames of images, or multiple frames of images obtained after processing such as image extraction is performed on the captured video, or multiple frames of images downloaded, or multiple frames of images obtained after processing such as image extraction is performed on a downloaded video, to determine positions of a target in the multiple frames of images, thereby implementing target tracking. An application scenario of the method for obtaining a position of a target is not limited in the embodiment of the present disclosure.

The method for obtaining a position of a target may be applied to various target tracking scenarios, for example, to analyze a scenario in an image or video, to track a target by using a monitoring device, or a human-computer interaction scenario. Certainly, the method for obtaining a position of a target provided in the embodiment of the present disclosure is not limited to be applied to these scenarios, and may be applied to other scenarios, which are not listed herein. A target may be a person or an object. In different application scenarios, the target may be different. For example, in an indoor monitoring scenario, the target may be a person; and in a road monitoring scenario, the target may be a vehicle. Both the computer device 101 and the computer device 102 may be implemented as terminals or servers. Specific implementation of the computer devices 101 and 102 are not limited in the embodiment of the present disclosure.

It is to be noted that, the method for obtaining a position of a target provided in the embodiment of the present disclosure may be implemented based on artificial intelligence. The artificial intelligence (AI) is a theory, method, technology, and application system in which a digital computer or a machine controlled by the digital computer is utilized to simulate, extend, and expand human intelligence, perceive an environment, obtain knowledge, and knowledge is utilized to obtain an optimal result. In other words, the artificial intelligence is a comprehensive technology in computer science and attempts to understand the essence of intelligence and produce a new intelligent machine that can react in a manner similar to human intelligence. The artificial intelligence is to study the design principles and implementation methods of various intelligent machines, to enable the machines to have the functions of perception, reasoning, and decision-making.

The artificial intelligence technology is a comprehensive discipline, and relates to a wide range of fields including both hardware-level technologies and software-level technologies. The basic artificial intelligence technologies generally include technologies such as a sensor, a dedicated artificial intelligence chip, cloud computing, distributed storage, a big data processing technology, an operating/interaction system, and electromechanical integration. Artificial intelligence software technologies mainly include several major directions such as a computer vision technology, a speech technology, a natural language processing technology, and machine learning /deep learning.

The solutions provided in the embodiments of the present application include technologies such as machine learning/deep learning of artificial intelligence and computer vision. In the embodiment of the present application, for example, a position obtaining model is trained through machine learning, and then positions of a to-be-detected target in multiple frames of images are determined by using the position obtaining model obtained through training.

Machine learning (ML) is a multi-field cross disciplinary, and relates to multiple disciplines such as the probability theory, statistics, the approximation theory, convex analysis, and the algorithm complexity theory. ML specializes in studying how a computer simulates or implements a human learning behavior to obtain new knowledge or skills, and reorganize an existing knowledge structure, so as to keep improving its performance. ML is the core of artificial intelligence, is a basic way to make the computer intelligent, and is applied to various fields of artificial intelligence. ML and deep learning generally include technologies such as an artificial neural network, a belief network, reinforcement learning, transfer learning, inductive learning, and learning from demonstrations.

In a process of training a position obtaining model or obtaining a position of a target, the computer vision technology may be further involved. The computer vision (CV) is a science that studies how to use a machine to "see". In the CV, human eyes are replaced with a camera and a computer to perform machine vision such as recognition, tracking, and measurement on a target, and graphic processing is performed, so that the computer processes the target into an image more suitable for human eyes to observe, or an image transmitted to an instrument for detection. As a scientific discipline, CV studies related theories and technologies and attempts to establish an AI system that can obtain information from images or multidimensional data.

In the embodiment of the present disclosure, for example, technologies such as image processing and image semantic understanding in the CV technology are involved. For example, after an image such as a to-be-recognized image or a training sample is obtained, image processing is performed, for example, target selection. In another example, image feature extraction is performed by using the image semantic understanding technology.

Figure 2 is a flowchart of a method for training a position obtaining model according to an embodiment of the present disclosure. The method may be applied to a computer device, and the computer device may be implemented as a terminal or as a server. Implementations of the computer device are not limited in the embodiment of the present disclosure. Referring to Figure 2, the method may include the following steps: S201 to S206.

In step 201, a computer device obtains multiple frames of sample images.

In the embodiment of the present disclosure, the computer device may obtain multiple frames of sample images and train an initial model based on the multiple frames of sample images, to obtain a position obtaining model. The position obtaining model may process multiple frames of images based on a to-be-detected target determined in one of the multiple frames of images, to obtain a position of the to-be-detected target in each of the multiple frames of images.

The computer device may obtain multiple frames of sample images and trains the initial model by using the multiple frames of sample images as training samples. In the embodiment of the present disclosure, it is unnecessary to manually annotate a target in the multiple frames of sample images by a technician, and the computer device can directly process the multiple frames of sample images and train the initial model, thereby implementing unsupervised learning, reducing labor costs, and improving efficiency of model training.

In an implementation, the multiple frames of sample images include multiple sample image sets. Each sample image set includes one frame of first sample image and at least one frame of second sample image, and the second sample image is a sample image other than the first sample image.

For example, the first sample image may function as a template image, that is, a sample image for obtaining a selected target. The second sample image may function as a search image. The search image is a sample image for searching for a position of the selected target, that is, the position of the selected target in the search image may be obtained based on the selected target in the template image. In this implementation, each sample image set is a training sample set, and multiple frames of sample images (one frame of first sample image and at least one frame of second sample image) in each sample image set include the same selected target. The computer device may track the selected target, to obtain a position of the selected target in each of the multiple frames of sample images.

For example, each sample image set may include one frame of first sample image and two frames of second sample images. For example, three frames may be selected from ten adjacent frames of a video file, where one frame functions as the first sample image, and the other two frames function as the second sample images. That is, it is assumed that the selected target does not move out of a specific area within the ten frames. Multiple frames of second sample images are obtained, so as to avoid a high error value of a result obtained by chance during processing based on one frame of first sample image and one frame of second sample image. In fact, intermediate data during the processing is wrong. Such an accidental situation can be reduced by increasing training samples, and errors are accumulated for correction, thereby improving the stability of the position obtaining model and controlling the error.

The computer device may obtain the multiple frames of sample images in various manners. In one aspect, the multiple frames of sample images may be stored in the computer device, or may be stored in another computer device. The computer device may obtain the multiple frames of sample images from a local storage file, or may send an image obtaining request to another computer device. The another computer device sends the multiple frames of sample images to the computer device in response to the image obtaining request, so that the computer device obtains the multiple frames of sample images. The manner for obtaining the multiple frames of sample images by the computer device is not limited in the embodiment of the present disclosure.

In another aspect, the computer device may directly obtain the multiple frames of sample images, or may extract the multiple frames of sample images from a video file. The multiple frames of sample images may be stored in an image database, and the computer device may obtain the multiple frames of sample images from the image database. The video file in which the multiple frames of sample images are located may be stored in a video database, and the computer device may obtain at least one video file from the video database, to extract the multiple frames of sample images from the at least one video file. This is not limited in the embodiment of the present disclosure. In an example, the multiple frames of sample images may be from ILSVRC 2015, and ILSVRC 2015 is a data set for visual recognition. Alternatively, the computer device may download a video file from a network to perform image extraction. A sample image of the present disclosure is unnecessary to carry tag data and is unnecessary to be manually annotated. Therefore, it is convenient to obtain the multiple frames of sample images. The manner for obtaining the sample image is not limited in the embodiment of the present disclosure.

In an embodiment, the multiple frames of sample images may be cropped images of extracted or obtained images. After extracting or obtaining multiple frames of images in the foregoing manner, the computer device may crop the multiple frames of images, to obtain the multiple frames of sample images. The computer device may use a center of the multiple frames of images as a criterion, and crop a target area with the center as a center point from the multiple frames of images, to obtain the multiple frames of sample images.

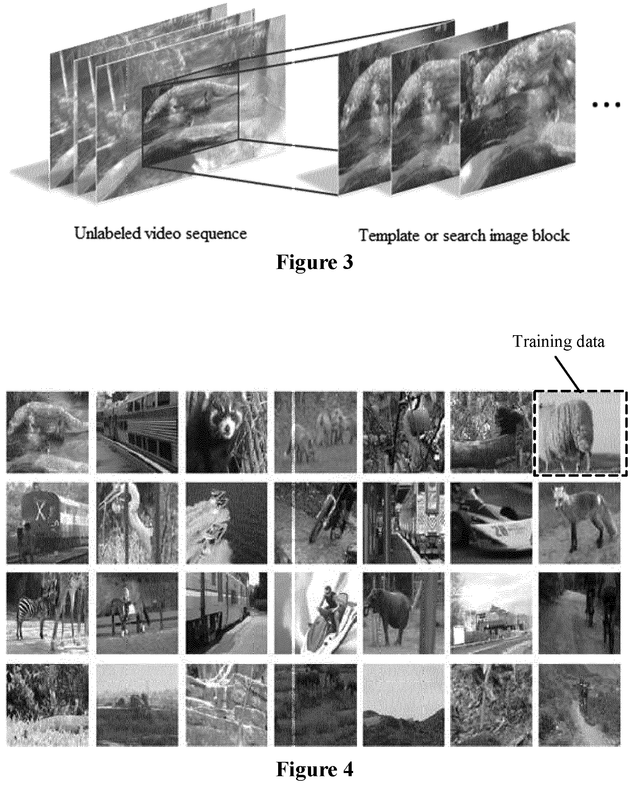

For example, as shown in Figure 3, the multiple frames of sample images include multiple sample image sets and each sample image set includes three frames of sample images. The computer device may extract three frames of images from an image sequence of an unlabeled video, and crop central areas (for example, areas identified by a rectangular box in Figure 3) of the three frames of images to obtain three frames of sample images. The three frames of sample images may include a template image and a search image block. The template image refers to a first sample image, and the search image block refers to the search image, that is, the second sample image. Figure 3 shows only a process of obtaining one sample image set. The computer device may obtain a large number of sample images in the same manner, to train the initial model. The foregoing sample image obtaining process is implemented based on a basic assumption that the selected target does not move out of a specific area (the central area of the image) within short time (within 10 frames). In an ideal case, there may be a complete selected target in the central area of the image. However, in many cases, the central area may include a partial selected target, or even a target contour, a background object, or the like. Figure 4 shows some randomly acquired training data. Figure 4 includes a total of 28 images. Each image is an example of a frame of image acquired for a target. These images functioning as the training data include selected targets, and the selected target may be a person or an object. Each image is a piece of training data. For example, an image identified by a dashed box in Figure 4 is a piece of training data. A selected target in the image may be a sheep, and details of each image are not repeated herein. The selected targets are relatively close to central areas of the images, so that the selected targets do not move out of specific areas within short time. This case will be described in the subsequent image processing, and details are not described herein.

In step 202, the computer device invokes an initial model, and randomly selects a target area in a first sample image in the multiple frames of sample images as a selected target according to the initial model.

After obtaining the multiple frames of sample images, the computer device may invoke the initial model, and train the initial model based on the multiple frames of sample images. A model parameter of the initial model is an initial value. The initial model may process the multiple frames of sample images based on the model parameter, and predict positions of a target in the multiple frames of sample images. A predicted result may be inaccurate. Therefore, the computer device may adjust the model parameter of the initial model in the training process, to increase an error value of image processing by the initial model, and a position obtaining model finally obtained through training may process an image with a high error value.

Therefore, the computer device may perform step 202 to input the multiple frames of sample images into the initial model. Because the multiple frames of sample images are not manually annotated and the multiple frames of sample images does not include a given target, the initial model may randomly select a target area from the first sample image as a selected target, predict a position of the selected target in the second sample image, and perform the subsequent training process.

The process of randomly selecting the target area by the computer device may be implemented based on a random algorithm, and the random algorithm may be set by a related technician according to requirements. This is not limited in this embodiment of the present disclosure.

In step 203, the initial model in the computer device obtains a third position of the selected target in a second sample image based on a first position of the selected target in the first sample image, the first sample image, and the second sample image.

After determining the selected target in the first sample image, the computer device may obtain a position of the selected target in the second sample image, such as the third position, based on the selected target. As can be understood, the computer device determines the selected target in the first sample image, and the first position of the selected target in the first sample image is a real position. Therefore, the computer device may use the first position as real data to determine an error value of the subsequent prediction data. For details, one may refer to the following steps 203 to 205. Details are not described in the embodiment of the present disclosure herein.

The initial model in the computer device may process the first sample image and the second sample image based on the first position of the selected target in the first sample image, to obtain the third position, that is, a predicted position, of the selected target in the second sample image. For example, the prediction process may be a forward process, that is, the computer device may predict the third position of the target in the second sample image based on the first position of the target in the first sample image, to implement target tracking. In an implementation, the prediction process may be implemented through the following steps 1 and 2:

In step 1, the initial model in the computer device obtains a first image processing parameter based on the first position of the target in the first sample image and the first sample image.

In step 1, the initial model in the computer device may determine a first image processing parameter in a case that data before processing and a processing result are known. The first image processing parameter indicates how to process the first sample image to obtain the first position of the selected target in the first sample image. The first image processing parameter obtained in this way may be used to perform similar processing on the second sample image, thereby obtaining the third position of the selected target in the second sample image.

In an implementation, the initial model in the computer device may first extract an image feature of the first sample image, and then process the image feature. In step 1, the initial model in the computer device may perform feature extraction on the first sample image based on the model parameter of the initial model, to obtain an image feature of the first sample image. The initial model in the computer device obtains the first image processing parameter based on the image feature of the first sample image and the first position of the selected target in the first sample image. The initial model in the computer device processes the image feature of the first sample image based on the first image processing parameter, to obtain the first position of the selected target in the first sample image.

In step 2, the initial model in the computer device processes the second sample image based on the first image processing parameter, to obtain the third position of the selected target in the second sample image.

In step 2, after determining the first image processing parameter, the initial model in the computer device learns how to process the sample image, and thus may perform similar processing on the second sample image, to predict the third position of the selected target in the second sample image.

In step 1, in the implementation that the initial model in the computer device first extracts the image feature of the first sample image and then processes the image feature, the initial model in the computer device may perform feature extraction on the second sample image based on the model parameter of the initial model, to obtain an image feature of the second sample image. The computer device processes the image feature of the second sample image based on the first image processing parameter, to obtain the third position of the selected target in the second sample image.

In an embodiment, the first position of the selected target in the first sample image may be indicated by position indication information. Therefore, in step 203, the initial model in the computer device may generate first position indication information of the first sample image based on the first position of the selected target in the first sample image. The first position indication information indicates the first position of the selected target in the first sample image. Then the initial model in the computer device may obtain position indication information of the second sample image based on the first position indication information, the first sample image, and the second sample image. The position indication information of the second sample image indicates the third position of the selected target in the second sample image.

Correspondingly, in step 2, the initial model in the computer device processes the image feature of the second sample image based on the first image processing parameter, to obtain the position indication information of the second sample image. In an embodiment, the initial model may perform convolution on the first image processing parameter and the image feature of the second sample image, to obtain the position indication information of the second sample image.

In an implementation, the first position indication information and the position indication information of the second sample image may be a response diagram, and a position of a peak of the response diagram is the position of the selected target. For example, the response diagram may be a matrix, and each value in the matrix may represent one or more pixels. In fact, the foregoing process may be performed as follows. After obtaining the selected target, the initial model in the computer device may generate the first position indication information based on the first sample image and the first position of the selected target in the first sample image, the first position indication information being a real label of the first sample image; and the initial model in the computer device performs feature extraction on the first sample image based on the model parameter, to obtain the image feature of the first sample image. Originally, when the computer device processes the image feature of the first sample image based on the first image processing parameter, the first position indication information (the response diagram or the real label) is to be obtained. Now, the image feature of the first sample image has been processed and the first position indication information is obtained, the first image processing parameter may be calculated. Then feature extraction is performed on the second sample image to obtain the image feature of the second sample image. Based on the calculated first image processing parameter, the image feature of the second sample image is processed to obtain the position indication information of the second sample image, which is also a response diagram.

In an embodiment, the first position indication information may be a Gaussian-shaped response diagram. The position indication information of the second sample image may be irregular and thus is not a Gaussian-shaped response diagram.

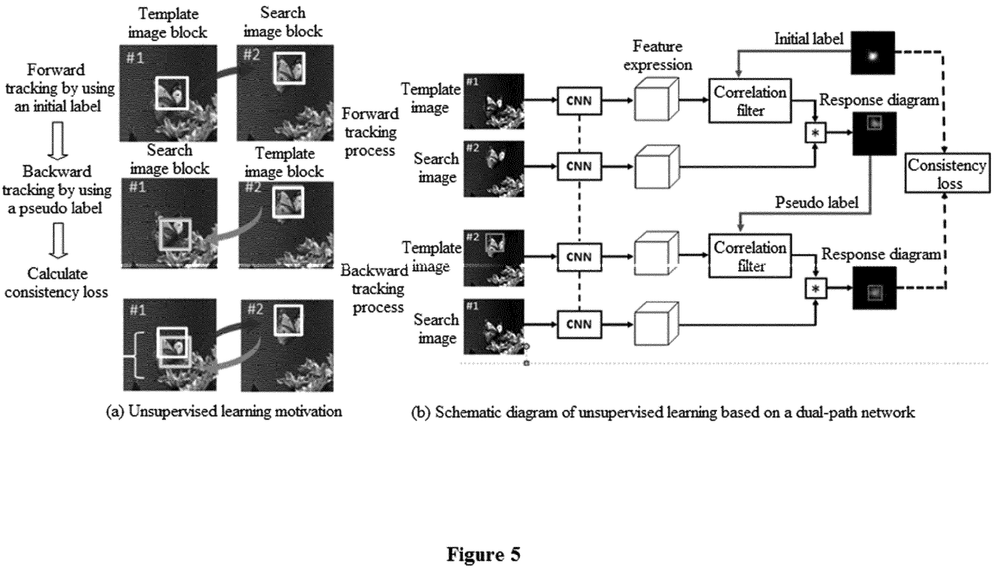

For example, the initial model may include a dual-path network, where one path is used to process the first sample image, and the other path is used to process the second sample image. The foregoing first image processing parameter may be a coefficient in a correlation filter, for example. The process in step 203 may be as shown in Figure (a) and Figure (b) in Figure 5. It is assumed that the first sample image is a template image or a template image block, the second sample image is a search image or a search image block, an initial label is the first position indication information, and the response diagram is the position indication information of the second sample image. The initial model may first determine a selected target in the template image, generate the initial label after determining the selected target, perform feature extraction on the template image based on a convolutional neural network (CNN), and perform feature expression, thereby calculating the coefficient in the correlation filter based on the initial label and an image feature of the template image. The initial model may perform feature extraction on the search image, and then perform convolution on the coefficient of the correlation filter and an image feature of the search image, to obtain a response diagram. A position of a peak of the response diagram is the third position of the selected target in the second sample image.

The initial model may perform feature extraction on the template image and the search image simultaneously or sequentially. The initial model and the finally obtained position obtaining model are extremely lightweight. For example, only two convolutional layers may be included, and sizes of CNN filters may be 3x3x32x32 and 3x3x32x32. Certainly, local response normalization may be further performed on the last layer. This lightweight network structure can achieve extremely high efficiency of tracking a target. In an implementation, in an unsupervised model based on forward and backward, general feature expressions can be learned, and good target tracking can be implemented after the training is completed.

In an implementation, the process of obtaining the first image processing parameter by the initial model may be implemented based on the following formula 1:

$$\text{Formula 1:} \quad \mathbf{W_T} = \mathscr{F}^{-1}\left( \frac{\mathscr{F}(\varphi_\theta(\mathbf{T})) \odot \mathscr{F}^\star(\mathbf{Y_T})}{\mathscr{F}^\star(\varphi_\theta(\mathbf{T})) \odot \mathscr{F}(\varphi_\theta(\mathbf{T})) + \lambda} \right),$$

where $\varphi_\theta(\cdot)$ represents a feature extraction operation of a CNN, $\theta$ represents a model parameter that the network needs to learn, and $Y_T$ represents the first position indication information of the first sample image, that is, the initial label. $W_T$ represents the first image processing parameter, that is, the coefficient of the correlation filter in the example, $\lambda$ represents

a regularization parameter, $\odot$ represents a point multiplication operation between elements, $\mathscr{F}(\cdot)$ represents a discrete Fourier transform, $\mathscr{F}^{-1}(\cdot)$ represents an inverse discrete Fourier transform, and * represents a complex conjugate. The calculation process is performed in the Fourier domain. T is used to identify the first sample image.

After obtaining the first image processing parameter $W_T$, the initial model may process the second sample image, and the processing process may be implemented based on the following formula 2:

$$\text{Formula 2:} \quad \mathbf{R_S} = \mathscr{F}^{-1}(\mathscr{F}^{\star}(\mathbf{W_T}) \odot \mathscr{F}(\varphi_\theta(\mathbf{S}))),$$

where $R_S$ represents the position indication information of the second sample image, that is, the response diagram corresponding to the second sample image in the foregoing example; $W_T$ represents the first image processing parameter, that is, the coefficient of the correlation filter in the example; $\mathscr{F}(\cdot)$ represents a discrete Fourier transform; $\mathscr{F}^{-1}(\cdot)$ represents an inverse discrete Fourier transform, * represents a complex conjugate, and $\odot$ represents a point multi-plication operation between elements. T is used to identify the first sample image, and S is used to identify the second sample image. $\varphi_\theta(\cdot)$ represents a feature extraction operation of the CNN.

In step 204, the initial model in the computer device obtains a second position of the selected target in the first sample image based on the third position of the selected target in the second sample image, the first sample image, and the second sample image. The second sample image is different from the first sample image in the multiple frames of sample images.

In the foregoing step, based on the first position of the selected target in the first sample image, the computer device obtains the third position of the selected target in the second sample image through a forward process, and then may use the third position of the selected target in the second sample image as a pseudo label of the second sample image. That is, the third position of the selected target in the second sample image is not real data. It is assumed that the third position is real data, a backward process is performed to obtain the second position of the selected target in the first sample image. The backward process is the same as the image processing process of the forward process, except that the first sample image and the second sample image are interchanged: the second sample image functions as the template image, and the first sample image functions as the search image, to perform backward prediction.

Similar to the content shown in the foregoing step 203, step 204 may be implemented through the following steps 1 and 2.

In step 1, the initial model in the computer device obtains a second image processing parameter based on the third position of the selected target in the second sample image and the second sample image.

This step is the same as step 1 in step 203, except that the first sample image and the second sample image are interchanged: the second sample image functions as the template image, and the first sample image functions as the search image, to perform the same processing. The second image processing parameter indicates how to process the second sample image to obtain the second position of the selected target in the second sample image.

Similar to step 1 in step 203, the initial model in the computer device may first extract an image feature, and then process the image feature. Specifically, the initial model in the computer device may perform feature extraction on the second sample image based on the model parameter of the initial model, to obtain an image feature of the second sample image. The initial model in the computer device obtains the second image processing parameter based on the image feature of the second sample image and the third position of the selected target in the second sample image.

In step 2, the initial model in the computer device processes the first sample image based on the second image processing parameter, to obtain the second position of the selected target in the first sample image.

This step is the same as step 2 in step 203, except that the first sample image and the second sample image are interchanged: the second sample image functions as the template image, and the first sample image functions as the search image, to perform the same processing.

Similar to step 1 in step 203, the initial model in the computer device may perform feature extraction on the first sample image based on the model parameter of the initial model, to obtain an image feature of the first sample image. The computer device processes the image feature of the first sample image based on the second image processing parameter, to obtain the second position of the selected target in the first sample image.

In an implementation shown in step 203, the position of the selected target in the image may be indicated by position indication information. In step 204, the initial model in the computer device may obtain second position indication information of the first sample image based on the position indication information of the second sample image, the first sample image, and the second sample image. The second position indication information indicates the second position of the selected target in the first sample image.

For example, when the foregoing manner of first extracting and then processing the image feature and the manner of using the position indication information are used simultaneously, step 204 may be implemented as follows. The initial model in the computer device performs feature extraction on the second sample image based on the model parameter to obtain the image feature of the second sample image, obtains the second image processing parameter based on the image feature and the position indication information (the third position of the selected target in the second sample image) of the second sample image; performs feature extraction on the first sample image to obtain the image feature of the first sample image; and processes the image feature of the first sample image based on the second image processing parameter, to obtain the second position indication information (the second position of the selected target in the first sample image) of the first sample image.

Step 203 is the forward process, and step 204 is the backward process. Through combination of the forward process and the backward processes, based on the first position (real position) of the selected target in the first sample image, the second position (predicted position) of the selected target in the first sample image may be obtained through the second sample image, so that an error value of image processing by the initial model may be obtained based on the first position and the second position. For example, as shown in Figure (b) in Figure 5, step 203 corresponds to a forward tracking process, and step 204 corresponds to a backward tracking process. In the backward tracking process, the template image and the search image are interchanged, that is, the template image becomes the second sample image, and the search image becomes the first sample image. However, the processing of the template image and the search image is the same as the forward tracking process. A response diagram obtained in the backward tracking process is the second position indication information of the first sample image. As shown in Figure 5(a), #1 in Figure 5 is used to identify the first sample image, and #2 is used to identify the second sample image. It may be obtained from Figure 5 that, for the selected target determined in #1 (a position identified by a white rectangle in #1 functioning as the template image block in Figure 5(a)), the predicted position, that is, the third position, of the selected target may be determined in #2 (a position identified by a white rectangle in #2 functioning as the search image block in Figure (a)). Then, based on the third position of the selected target in #2, the second position of the selected target in #1 is tracked backward (a position identified by a gray rectangle in #1 functioning as the search image block in Figure 5(a)); and then based on the first position of the target in #1 (the position identified by the white rectangular box) and the second position (the position identified by the gray rectangular box), it is determined whether the error value of the initial model is good. That is, consistency calculation is performed on the first position of the selected target determined in #1 and the second position obtained through backward calculation for #2.

In an implementation, the initial model in the computer device may perform step 204 by using formulas the same as the foregoing formula 1 and formula 2, that is, T in formula 1 is replaced with S, $Y_T$ is replaced with $Y_S$, $Y_S$ is $R_S$ or a Gaussian-shape response diagram generated based on $R_S$, S in Formula 2 is replaced with T, and $W_T$ is replaced with $W_S$, where $Y_S$ represents the position indication information of the second sample image or Gaussian-shaped position indication information obtained based on $R_S$. In the forward and backward tracking processes, the model parameter of the CNN is fixed.

In step 205, the computer device obtains an error value of the second position relative to the first position based on the first position and the second position of the selected target in the first sample image.

After obtaining the first position and the second position of the selected target in the first sample image, the computer device may evaluate the prediction error value of the initial model, so as to determine, based on the error value of the second position relative to the first position of the target in the first sample image, whether to adjust the model parameter of the initial model. In an implementation, a smaller error value indicates a more appropriate model parameter of the initial model. In another implementation, the process may be implemented by using a reward mechanism. That is, a greater error value indicates a more appropriate model parameter of the initial model. A description is made by using an example in which a smaller error value indicates a more appropriate model parameter. Based on this principle, the following step 206 may be performed to train the initial model, to obtain a position obtaining model with a small prediction error value.

In an implementation, the multiple frames of sample images may include multiple sample image sets, and each sample image set corresponds to one error value for the predicted position. The computer device may obtain at least one error value based on a first sample image and at least one frame of second sample image included in the sample image set. That is, each frame of second sample image may correspond to an error value, and an error value corresponding to the sample image set may be determined based on the at least one error value.

In an implementation, the computer device may obtain an average value of the at least one error value, and use the average value as the error value corresponding to the sample image set. In an implementation, the computer device may perform weighted summation on the at least one error value, to obtain the error value corresponding to the sample image set. An implementation of obtaining the error value is not limited in the embodiment of the present disclosure.

In step 206, the computer device adjusts a model parameter of the initial model based on the error value until a target condition is met, to obtain a position obtaining model.

After obtaining the error value predicted by using the initial model, the computer device may adjust the model parameter based on the error value until the error value is relatively small, to obtain the position obtaining model. The prediction accuracy of the position obtaining model is relatively high. The target condition may be that the error value converges or a quantity of iterations reaches a target quantity. The position obtaining model obtained by using the target condition has good image processing capabilities, thereby achieving a target tracking process with a small error value.

In an implementation, the multiple frames of sample images may include multiple sample image sets, and each sample image set corresponds to one error value for the predicted position. The computer device may adjust the model parameter of the initial model according to an error value corresponding to each sample image set.

In another implementation, the computer device may divide training samples into multiple batches, and each batch includes a target quantity of sample image sets. The computer device may adjust the model parameter of the initial model based on error values corresponding to each batch. For example, for a target quantity of sample image sets in the multiple sample image sets, the computer device may adjust the model parameter of the initial model based on multiple error values corresponding to the target quantity of sample image sets. The target quantity may be preset by a technician according to requirements, which is not limited in the embodiment of the present disclosure.

In an embodiment, when the computer device adjusts the model parameter of the initial model, the multiple sample image sets may include undesirable sample images. For example, in multiple frames of sample images in a sample image set, a movement displacement of the selected target is excessively large, and the selected target may even move out of a coverage of the image; an error value corresponding to such a sample image set does not play an important role in the training of the initial model. The impact of such samples is to be weakened, and such samples may be referred to as difficult samples. In this case, the computer device may further perform any of the following manners.

Manner 1: the computer device removes, based on the multiple error values corresponding to the target quantity of sample image sets, error values meeting an error value condition from the multiple error values, and adjusts the model parameter of the initial model based on remaining error values.

Manner 2: the computer device determines, based on the multiple error values corresponding to the target quantity of sample image sets, first weights for the multiple error values, and adjusts the model parameter of the initial model based on the first weights of the multiple error values and the multiple error values. First weights of the error values meeting the error value condition in the multiple error values are zero.

The manner 1 and manner 2 are same in that: an effect of the error values meeting the error value condition in the multiple error values on the adjustment of the model parameter is reduced to zero. In manner 1, the error values meeting condition are directly removed, and in manner 2, the first weights are set for the error values meeting condition, and the first weights are zero. The error value condition may be that error values with a largest error value reach a target proportion. Both the error value condition and the target portion may be preset by a technician according to requirements, which is not limited in the embodiment of the present disclosure. For example, the target proportion may be 10%. The computer device may remove 10% of training samples in a batch, that is, remove the 10% with largest error values, or reset weights of the error values of the 10% with the largest error values to be zero. For example, in manner 2, a binary weight $A_{drop}$ (a first weight) is introduced, the weight $A_{drop}$ of the error values meeting the error value condition is 0, and a weight of other error values is 1. Therefore, an impact of noise samples and even polluted samples (with an occlusion problem) is reduced, and the convergence of model training is not affected due to such training samples.

In an embodiment, each sample image set may correspond to a second weight, and the second weight indicates a displacement of a selected target in multiple frames of sample images of the sample image set. As can be understood, when a movement displacement of the selected target in the multiple frames of sample images in the sample image set is very small, or even zero, the selected target is tracked, and an error value obtained cannot reflect a prediction capability of the initial model. Therefore, an effect of the error value on adjusting of the model parameter is to be weakened.

In this embodiment, in step 206, the computer device may obtain a second weight of an error value of each sample image set. The second weight is positively correlated with a displacement of the target in each sample image set in the multiple frames of sample images. After obtaining the second weight, the computer device may adjust the model parameter of the initial model based on the multiple error values and multiple second weights corresponding to the target quantity of sample image sets. For example, the computer device may obtain a total error value corresponding to the target quantity of sample image sets based on the multiple error values and the multiple second weights corresponding to the target quantity of sample image sets, to adjust the model parameter of the initial model based on the total error value.

For example, in a specific example, a second weight $A_{motion}$ may be introduced, and the computer device may obtain the second weight by using the following formula 3:

$$\text{Formula 3:} \quad \mathbf{A}_{\text{motion}}^{i} = \left\| \mathbf{R}_{\mathbf{S}_1}^{i} - \mathbf{Y}_{\mathbf{T}}^{i} \right\|_2^2 + \left\| \mathbf{R}_{\mathbf{S}_2}^{i} - \mathbf{Y}_{\mathbf{S}_1}^{i} \right\|_2^2,$$

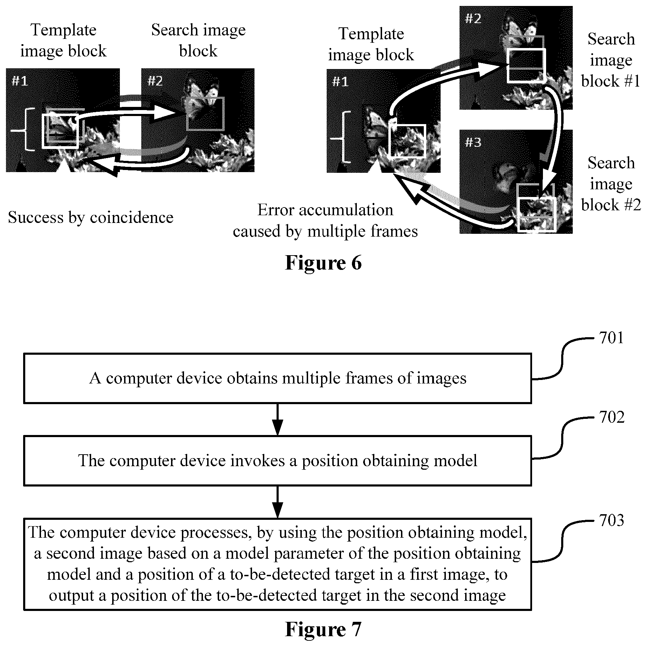

where $A_{motion}$ represents the second weight, i represents an identifier of the sample image set, $R_S$ represents the position indication information of the second sample image, $Y_T$ represents the first position indication information of the first sample image, $Y_S$ represents the position indication information of the second sample image or the Gaussian-shape position indication information obtained based on $R_S$. In this formula, for example, the sample image set includes only one frame of first sample image and two frames of second sample images. T represents the first sample image, S represents the second sample image, S1 represents one frame of second sample image, and S2 represents the other frame of second sample image. For example, as shown in Figure 6, a case of using one frame of first sample image (template image block) and one frame of second sample image (search image block) is shown in #1 and #2 in the left figure, which may be a success by coincidence. A case of using one frame of first sample image and two frames of second sample images is shown in #1, #2, and #3 in the right figure. #2 in the right figure may be also referred to as a search image block #1, and #3 in the right figure may be also referred to as a search image block #2. By adding a second sample image, the success by coincidence can be avoided, and errors may be accumulated, thereby improving accuracy and stability of the position obtaining model.

In an implementation, the computer device may integrate the foregoing first weight and second weight to adjust the model parameter. That is, both an excessive sample error value and the displacement are taken into account. Specifically, for the multiple error values corresponding to the target quantity of sample image sets, the computer device may obtain a total weight of the error values based on the first weight and the second weight, perform weighted summation on the multiple error values based on the total weight of the multiple error values, to obtain a total error value of the multiple error values, and adjust the model parameter of the initial model based on the total error value.

For example, the process of obtaining the total error value may be implemented by using the following formula 4:

$$\text{Formula 4:} \quad \mathbf{A}_{\text{norm}}^{i} = \frac{\mathbf{A}_{\text{drop}}^{i} \cdot \mathbf{A}_{\text{motion}}^{i}}{\sum_{i=1}^{n} \mathbf{A}_{\text{drop}}^{i} \cdot \mathbf{A}_{\text{motion}}^{i}},$$

where $A_{\text{drop}}$ represents the first weight, $A_{\text{motion}}$ represents the second weight, n represents the target quantity and is a positive integer greater than 1, and i represents the identifier of the sample image set. $\mathbf{A}_{\text{norm}}^{i}$ represents the total weight.

The total error value may be represented by a reduced reconstruction error. For example, the process of obtaining the total error value may be implemented by using the following formula 5:

$$\text{Formula 5:} \quad \mathcal{L}_{\text{un}} = \frac{1}{n} \sum_{i=1}^{n} \mathbf{A}_{\text{norm}}^{i} \cdot \left\| \tilde{\mathbf{R}}_{\mathbf{T}}^{i} - \mathbf{Y}_{\mathbf{T}}^{i} \right\|_{2}^{2}.$$

where $\tilde{R}_T$ represents the second position (the second position indication information of the first sample image) of the selected target in the first sample image, $Y_T$ represents the first position (the first position indication information of the first sample image) of the selected target in a sample image, n represents the target quantity and is a positive integer greater than 1, and i represents the identifier of the sample image set. $\mathcal{L}_{\text{un}}$ represents the total error value of the target quantity of sample image sets. Certainly, this is only an exemplary description, and the total error value may be represented by another error or reward value. Representation of the total error value is not limited in the embodiment of the present disclosure.

By obtaining the total weight, a case of excessively small displacement of the target in the multiple frames of images is optimized, and a case of excessively large displacement of the selected target in the multiple frames of sample images is also optimized. Therefore, a relatively small total error value may be obtained. Based on this, the model parameter is adjusted, so that the accuracy of image processing of the obtained position obtaining model is also improved.

If the sample image set includes only one frame of first sample image and one frame of second sample image, the process of obtaining the total error value may be implemented by using the following formula 6:

$$\text{Formula 6:} \quad \mathcal{L}_{\text{un}} = \left\| \tilde{\mathbf{R}}_{\mathbf{T}} - \mathbf{Y}_{\mathbf{T}} \right\|_{2}^{2},$$

where $\tilde{R}_T$ represents the second position (the second position indication information of the first sample image) of the selected target in the first sample image, $Y_T$ represents the first position (the first position indication information of the first sample image) of the selected target in a sample image, and $\mathcal{L}_{\text{un}}$ represents the total error value corresponding to the target quantity of sample image sets.

In an implementation, the model parameter adjustment process may be implemented by gradient backhaul. For details, one may refer to the following formula 7, which is only used as an exemplary description and does not limit the adjustment process:

$$\text{Formula 7:} \quad \frac{\partial \mathcal{L}_{\text{un}}}{\partial \varphi_\theta(\mathbf{T})} = \mathscr{F}^{-1}\left( \frac{\partial \mathcal{L}_{\text{un}}}{\partial \left( \mathscr{F}\left( \varphi_\theta(\mathbf{T}) \right) \right)^\star} + \left( \frac{\partial \mathcal{L}_{\text{un}}}{\partial \left( \mathscr{F}\left( \varphi_\theta(\mathbf{T}) \right) \right)} \right)^\star \right),$$

$$\frac{\partial \mathcal{L}_{\text{un}}}{\partial \varphi_\theta(\mathbf{S})} = \mathscr{F}^{-1}\left( \frac{\partial \mathcal{L}_{\text{un}}}{\partial \left( \mathscr{F}\left( \varphi_\theta(\mathbf{S}) \right) \right)^\star} \right).$$

where $\partial$ represents a partial differential symbol, $\mathcal{L}_{\text{un}}$ represents the total error value corresponding to the target quantity of sample image sets, $\mathscr{F}(\cdot)$ represents a discrete Fourier transform, $\mathscr{F}^{-1}(\cdot)$ represents an inverse discrete Fourier transform, and * represents a complex conjugate. T is used to identify the first sample image, and S is used to identify the second sample image. $\varphi_\theta(\cdot)$ represents a feature extraction operation of the CNN.

In an example, the position obtaining model may be referred to as a tracker. The tracker may perform forward and backward tracking. That is, for a given initial tracking target, the tracker may track the target forward; and the tracker is able to trace back to an initially specified position by using a tracking end position as a start point. Through self-calibration of the tracker, unsupervised training may be carried out. A robust tracker can be trained without carrying labels by the sample images, and has similar performance to a fully-supervised training tracker.

In the embodiments of the present disclosure, the multiple frames of images are processed by using the position obtaining model obtained through training, to obtain the positions of the target in the multiple frames of images. The position obtaining model may be obtained through training in forward and backward processes. Through the forward process, the third position of the selected target in the second sample image may be predicted according to the first position of the selected target in the first sample image; and through the backward process, the second position of the selected target in the first sample image may be predicted according to the third position. Because the selected target is randomly selected from the first sample image and the selected position is determined, the first position is a real position of the selected target. Based on the first position and the second position of the selected target in the first sample image, the accuracy of the model parameter of the initial model can be reflected by a difference between the first position and the second position. Therefore, the initial model can be trained according to the first position and the second position without manual annotation by the technician, thereby effectively reducing labor costs and improving efficiency of model training. With the technical solutions in the embodiments of the present disclosure, the image processing process is simple, thereby effectively improving efficiency of the entire process of obtaining a position of a target.

The process of training the position obtaining model is described in detail in the embodiment shown in Figure 2. A process of applying the position obtaining model to obtain a position of a target is described by using an embodiment shown in Figure 7 below. Figure 7 is a flowchart of a method for obtaining a position of a target according to an embodiment of the present disclosure. The method for obtaining a position of a target is applied to a computer device, and the computer device is implemented as a terminal or a server. Implementation of the computer device is not limited in the embodiment of the present disclosure. Referring to Figure 7, the method includes the following steps 701 to 703.

In step 701, a computer device obtains multiple frames of images. A first image in the multiple frames of images includes a to-be-detected target, and the first image is any frame of image in the multiple frames of images.

The computer device obtains multiple frames of images, and processes the multiple frames of images to determine first positions of the to-be-detected target in the multiple frames of images.

In step 701, the computer device obtains the multiple frames of images in many manners. In different application scenarios, the computer device obtains the multiple frames of images in different manners. The computer device has an image obtaining function. The computer device captures images, and performs the following image processing on multiple frames of images captured, to track the to-be-detected target in the multiple frames of images. In an embodiment, the computer device receives multiple frames of images sent by an image obtaining device, and performs the following image processing, to track the to-be-detected target in the multiple frames of images. The computer device further obtains a video shot in real time or a video stored at a target address, extracts multiple frames of images from the video, and performs the following image processing, to track the to-be-detected target in the multiple frames of images. The application scenario and the manner in which the computer device obtains the multiple frames of images are not limited in the embodiment of the present disclosure.

In an implementation, similar to the foregoing step 201, the computer device crops the obtained or extracted multiple frames of images to obtain multiple frames of images to be processed. Specifically, the computer device crops, from the obtained or extracted multiple frames of images, a target area with a center of the multiple frames of images as a center point, to obtain the multiple frames of images to be processed. Details are not described in the embodiment of the present disclosure.

In step 702, the computer device invokes a position obtaining model.

A model parameter of the position obtaining model is obtained through training based on a position (real position) of the to-be-detected target in a first sample image in the multiple frames of sample images and a position (predicted position) of the to-be-detected target in the first sample image. The position of the to-be-detected target in the first sample image is obtained based on a position of the to-be-detected target in a second sample image in the multiple frames of sample images. The position obtaining model is obtained through training based on the model training process shown in Figure 2.

The computer device shown in Figure 7 is the foregoing computer device shown in Figure 2, that is, the computer device invokes the position obtaining model from locally stored data. In an embodiment, the computer device shown in Figure 7 and the computer device shown in Figure 2 are different. The computer device shown in Figure 2 packages and sends the position obtaining model obtained through training to the computer device shown in Figure 7, and the computer device shown in Figure 7 performs processing such as decompression on the position obtaining model. When image processing is needed, the position obtaining model is invoked. Certainly, when image processing is needed, the computer device shown in Figure 7 invokes the trained position obtaining model in the computer device shown in Figure 2 in real time, which is not limited in the embodiment of the present disclosure.

In step 703, the computer device processes, by using the position obtaining model, a second image based on a model parameter of the position obtaining model and a position of a to-be-detected target in a first image, to output a position of the to-be-detected target in the second image. The second image is an image different from the first image in the multiple frames of images.

The position of the to-be-detected target in the first image is obtained by manual annotation by a technician, or is obtained by scanning the first image based on a scan setting by the computer device. The technician annotates a target area in the first image according to requirements, and uses the target area as the to-be-detected target. In another embodiment, the computer device is set to track a person. Therefore, the computer device performs scanning and face recognition on the first image, to determine a position of the person and use the position as the to-be-detected target. Certainly, only two embodiments are provided herein. The method for obtaining the position of the to-be-detected target is further applied to another application scenario. The computer device determines the position of the to-be-detected target in the first image by using use another method. This is not limited in the embodiment of the present disclosure.

Step 703 is similar to the foregoing step 203. The computer device obtains the position of the to-be-detected target in the second image through the following steps 1 and 2.

In step 1, the position obtaining model in the computer device obtains an image processing parameter based on the position of the to-be-detected target in the first image, the first image, and the model parameter.

Similar to step 1 in the foregoing step 203, the position obtaining model in the computer device generates position indication information of the first image based on the position of the to-be-detected target in the first image. The position indication information of the first image indicates the position of the target in the first image. The position obtaining model in the computer device obtains the image processing parameter based on the position indication information of the first image, the first image, and the model parameter.

In an implementation, the position indication information is a response diagram, and a position of a peak of the response diagram is the position of the to-be-detected target.

Similarly, in an embodiment, the position obtaining model in the computer device performs feature extraction on the first image based on the model parameter, to obtain an image feature of the first image; and obtain the image processing parameter based on the image feature of the first image and the position indication information of the first image.

In step 2, the position obtaining model in the computer device processes the second image based on the image processing parameter, to output the position of the to-be-detected target in the second image.

Similar to step 2 in the foregoing step 203, the position obtaining model in the computer device processes the second image based on the image processing parameter to output the position indication information of the second image. The position indication information of the second image indicates the position of the to-be-detected target in the second image.

Similar to step 2 in step 203, the position obtaining model in the computer device performs feature extraction on the second image based on the model parameter, to obtain an image feature of the second image; and processes the image feature of the second image based on the image processing parameter, to output the position indication information of the second image.

Step 703 is similar to the foregoing step 203. Details are not described herein.

In the embodiments of the present disclosure, the multiple frames of images are processed by using the position obtaining model obtained through training, to obtain the positions of the to-be-detected target in the multiple frames of images. The position obtaining model is obtained by training the initial model by using the real position and the predicted position of the to-be-detected target in the first sample image through the forward and backward processes without manual annotation by the technician, thereby effectively reducing labor costs and improving efficiency of model training. With the technical solutions in the present disclosure, the image processing process is simple, thereby effectively improving efficiency of the entire process of obtaining the position of the to-be-detected target.

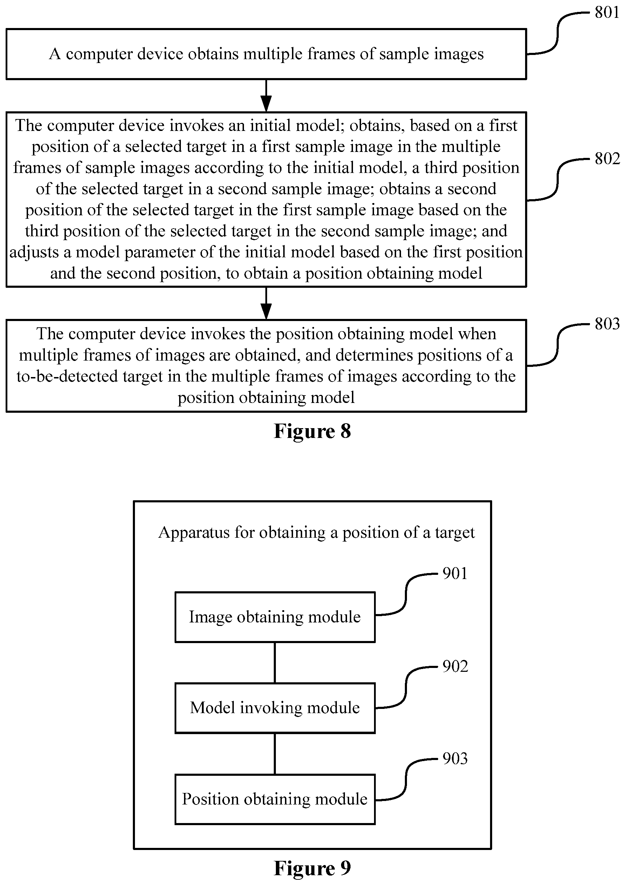

A model training process and a model use process are described below by using an embodiment shown in Figure 8. Figure 8 is a flowchart of a method for obtaining a position of a target according to an embodiment of the present disclosure. Referring to Figure 8, the method may include the following steps 801 to 803.

In step 801, a computer device obtains multiple frames of sample images.

In step 802, the computer device invokes an initial model; obtains, based on a first position of a selected target in a first sample image in the multiple frames of sample images according to the initial model, a third position of the selected target in a second sample image; obtains a second position of the selected target in the first sample image based on the third position of the selected target in the second sample image; and adjusts a model parameter of the initial model based on the first position and the second position, to obtain a position obtaining model. The selected target is obtained by randomly selecting a target area in the first sample image by the initial model, and the second sample image is different from the first sample image in the multiple frames of sample images.

Steps 801 and 802 have the same content as the embodiment shown in Figure 2, and details are not described in the embodiment of the present disclosure herein.

In step 803, the computer device invokes the position obtaining model when multiple frames of images are obtained, and determines positions of a to-be-detected target in the multiple frames of images according to the position obtaining model.

Step 803 has the same content as the embodiment shown in Figure 7, and details are not described in this embodiment of the present disclosure herein.

In the embodiments of the present disclosure, the selected target in the first sample image is randomly selected by using the initial model. Through the forward and backward processes, the predicted position of the selected target in the first sample image is obtained. The initial model is trained by using the real position and the predicted position of the target in the first sample image without manual annotation by the technician, thereby effectively reducing labor costs and improving efficiency of model training. In addition, the image may be processed by the position obtaining model trained in this way, to obtain the position of the to-be-detected target. With the technical solution in the present disclosure, the image processing process is simple, thereby effectively improving efficiency of the entire process of obtaining the position of the to-be-detected target.

An optional embodiment of the present disclosure may be formed by using any combination of all the foregoing optional technical solutions, and details are not described herein.

Figure 9 is a schematic structural diagram of an apparatus for obtaining a position of a target according to an embodiment of the present disclosure. Referring to Figure 9, the apparatus includes: an image obtaining module 901, a model invoking module 902 and a position obtaining module 902.

The image obtaining module 901 is configured to obtain multiple frames of images. A first image in the multiple frames of images includes a to-be-detected target, and the first image is any frame of image in the multiple frames of images.

The model invoking module 902 is configured to invoke a position obtaining model. A model parameter of the position obtaining model is obtained through training based on a first position of a selected target in a first sample image in multiple frames of sample images and a second position of the selected target in the first sample image. The second position is predicted based on a third position of the selected target in a second sample image in the multiple frames of sample images. The third position is predicted based on the first position, the selected target is randomly selected from the first sample image, and the second sample image is different from the first sample image in the multiple frames of sample images.

The position obtaining module 903 is configured to determine a position of the to-be-detected target in the second image based on the model parameter and a position of the to-be-detected target in the first image by using the position obtaining model. The second image is different from the first image in the multiple frames of images.

In an implementation, the position obtaining module 903 is configured to: obtain an image processing parameter based on the position of the to-be-detected target in the first image, the first image, and the model parameter; and process the second image based on the image processing parameter, to output the position of the to-be-detected target in the second image.

In an implementation, the position obtaining module 903 is configured to: generate position indication information of the first image based on the position of the to-be-detected target in the first image, the position indication information of the first image indicating a selected position of the to-be-detected target in the first image; and obtain the image processing parameter based on the position indication information of the first image, the first image, and the model parameter.

The position obtaining module 903 is configured to: process the second image based on the image processing parameter, to output position indication information of the second image. The position indication information of the second image indicates a predicted position of the to-be-detected target in the second image.

In an implementation, the position obtaining module 903 is configured to: perform feature extraction on the first image based on the model parameter, to obtain an image feature of the first image; and obtain the image processing parameter based on the image feature of the first image and the position indication information of the first image.

The position obtaining module 903 is configured to: perform feature extraction on the second image based on the model parameter, to obtain an image feature of the second image; and process the image feature of the second image based on the image processing parameter, to output the position indication information of the second image.

In an implementation, the apparatus further includes a model training module. The model training module is configured to: obtain multiple frames of sample images; invoke an initial model, randomly select, by using the initial model, a target area in the first sample image in the multiple frames of sample images as the selected target, obtain the third position of the selected target in the second sample image based on the first position of the selected target in the first sample image, the first sample image, and the second sample image, and obtain the second position of the selected target in the first sample image based on the third position of the selected target in the second sample image, the first sample image, and the second sample image; obtain an error value of the second position relative to the first position based on the first position and the second position of the selected target in the first sample image; and adjust a model parameter of the initial model based on the error value until a target condition is met, to obtain the position obtaining model.

In an implementation, the model training module is configured to: obtain a first image processing parameter based on the first position and the first sample image; and process the second sample image based on the first image processing parameter, to obtain the third position.

The model training module is configured to: obtain a second image processing parameter based on the third position and the second sample image; and process the first sample image based on the second image processing parameter, to obtain the second position.

The model training module is configured to: perform feature extraction on the first sample image based on the model parameter of the initial model, to obtain an image feature of the first sample image; and obtain the first image processing parameter based on the image feature of the first sample image and the first position.

The model training module is configured to: perform feature extraction on the second sample image based on the model parameter of the initial model, to obtain an image feature of the second sample image; and process the image feature of the second sample image based on the first image processing parameter, to obtain the third position.

In an implementation, the model training module is configured to: generate first position indication information of the first sample image based on the first position, the first position indication information indicating a selected position of the selected target in the first sample image; and obtain position indication information of the second sample image based on the first position indication information, the first sample image, and the second sample image, the position indication information of the second sample image indicating a predicted position of the selected target in the second sample image.

The model training module is configured to: obtain second position indication information of the first sample image based on the position indication information of the second sample image, the first sample image, and the second sample image. The second position indication information indicates a predicted position of the selected target in the first sample image.

In an implementation, the multiple frames of sample images include multiple sample image sets. Each sample image set includes one frame of first sample image and at least one frame of second sample image, and each sample image set corresponds to one error value for the predicted position.

The model training module is configured to: adjust, for a target quantity of sample image sets in the multiple sample image sets, the model parameter of the initial model based on multiple error values corresponding to the target quantity of sample image sets.

In an implementation, the model training module is configured to perform any one of the following:

removing, based on the multiple error values corresponding to the target quantity of sample image sets, error values meeting an error value condition from the multiple error values; and adjusting the model parameter of the initial model based on remaining error values; or

determining first weights for the multiple error values based on the multiple error values corresponding to the target quantity of sample image sets; and adjusting the model parameter of the initial model based on the first weights of the multiple error values and the multiple error values, first weights of error values meeting the error value condition in the multiple error values being zero.

In an implementation, each sample image set corresponds to a second weight; and the process of adjusting the model parameter of the initial model based on multiple error values corresponding to the target quantity of sample image sets includes:

obtaining a second weight for an error value of each sample image set, the second weight being positively correlated with a displacement of the selected target in each sample image set in the multiple frames of sample images; and

adjusting the model parameter of the initial model based on the multiple error values corresponding to the target quantity of sample image sets and multiple second weights.

According to the apparatus provided in the embodiments of the present disclosure, the multiple frames of images are processed by using the position obtaining model obtained through training, to obtain the positions of the target in the multiple frames of images. The position obtaining model is obtained through training in forward and backward processes. Through the forward process, the third position of the selected target in the second sample image is predicted according to the first position of the selected target in the first sample image; and through the backward process, the second position of the selected target in the first sample image is predicted according to the third position. Because the selected target is randomly selected from the first sample image and the selected position is determined, the first position is a real position of the selected target. Based on the first position and the second position of the selected target in the first sample image, the accuracy of the model parameter of the initial model is reflected by the difference between the first position and the second position. Therefore, the initial model is trained according to the first position and the second position without manual annotation by the technician, thereby effectively reducing labor costs and improving efficiency of model training. With the technical solution in the present disclosure, the image processing process is simple, thereby effectively improving efficiency of the entire process of obtaining a position of a target.

When the apparatus for obtaining a position of a target provided in the foregoing embodiment obtains the position of the target, descriptions are made with an example of division of the foregoing functional modules. In actual application, the functions may be allocated to and completed by different functional modules according to requirements, that is, the computer device is divided into different functional modules, to implement all or some of the functions described above. In addition, the apparatus for obtaining a position of a target provided in the foregoing embodiment and the embodiments of the method for obtaining a position of a target share the same concept. For a specific implementation process of the apparatus, one may refer to the method embodiments, and details are not repeated herein.

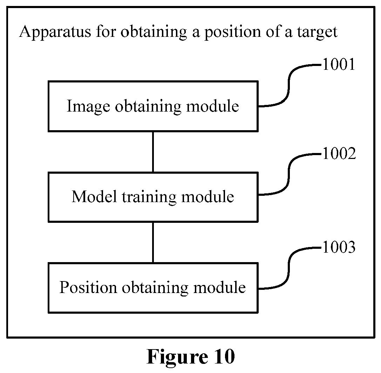

Figure 10 is a schematic structural diagram of an apparatus for obtaining a position of a target according to an embodiment of the present disclosure. Referring to Figure 10, the apparatus may include: an image obtaining module 1001, a model training module 1002 and a model training module 1003. The model obtaining module 1001 is configured to obtain multiple frames of sample images. The model training module 1002 is configured to invoke an initial model; obtain, based on a first position of a selected target in a first sample image in the multiple frames of sample images according to the initial model, a third position of the selected target in a second sample image; obtain a second position of the selected target in the first sample image based on the third position of the selected target in the second sample image; and adjust a model parameter of the initial model based on the first position and the second position, to obtain a position obtaining model. The position obtaining module 1003 is configured to invoke the position obtaining model when multiple frames of images are obtained, and determine positions of a to-be-detected target in the multiple frames of images according to the position obtaining model.

According to the apparatus provided in the embodiments of the present disclosure, the selected target in the first sample image is randomly selected by using the initial model, and the initial model is trained through the forward and backward processes. Through the forward process, the third position of the selected target in the second sample image may be predicted according to the first position of the selected target in the first sample image; and through the backward process, the second position of the selected target in the first sample image may be predicted according to the third position. Because the selected target is randomly selected from the first sample image and the selected position is determined, the first position is a real position of the selected target. Based on the first position and the second position of the selected target in the first sample image, the accuracy of the model parameter of the initial model can be reflected by the difference between the first position and the second position. Therefore, the initial model can be trained according to the first position and the second position without manual annotation by the technician, thereby effectively reducing labor costs and improving efficiency of model training. With the technical solution in the present disclosure, the image processing process is simple, thereby effectively improving efficiency of the entire process of obtaining a position of a target.

When the apparatus for obtaining a position of a target provided in the foregoing embodiment obtains the position of the target, descriptions are made with an example of division of the foregoing functional modules. In actual application, the functions may be allocated to and completed by different functional modules according to requirements, that is, the computer device is divided into different functional modules, to implement all or some of the functions described above. In addition, the apparatus for obtaining a position of a target provided in the foregoing embodiment and the embodiments of the method for obtaining a position of a target share the same concept. For a specific implementation process of the apparatus, one may refer to the method embodiments, and details are not repeated herein.

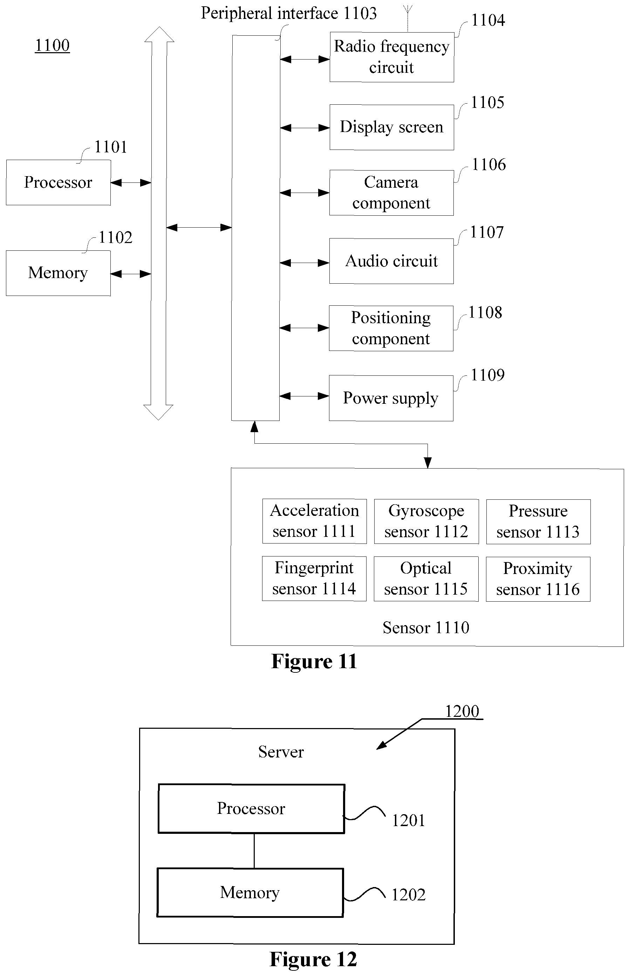

The computer device may be implemented as a terminal shown in Figure 11, or may be implemented as a server shown in Figure 12. This is not limited in the embodiment of the present disclosure.

Figure 11 is a schematic structural diagram of a terminal according to an embodiment of the present disclosure. The terminal 1100 may be a smartphone, a tablet computer, a Moving Picture Experts Group Audio Layer III (MP3) player, a Moving Picture Experts Group Audio Layer IV (MP4) player, a notebook computer, or a desktop computer. The terminal 1100 may also be referred to as another name such as user equipment, a portable terminal, a laptop terminal, or a desktop terminal.

Generally, the terminal 1100 includes one or more processors 1101 and one or more memories 1102.

The processor 1101 may include one or more processing cores, for example, a 4-core processor or an 8-core processor. The processor 1101 may be implemented in at least one hardware form of a digital signal processor (DSP), a field-programmable gate array (FPGA), and a programmable logic array (PLA). The processor 1101 may include a main processor and a coprocessor. The main processor is configured to process data in an awake state, and is also referred to as a central processing unit (CPU). The coprocessor is a low power consumption processor configured to process the data in a standby state. In some embodiments, the processor 1101 may be integrated with a graphics processing unit (GPU). The GPU is configured to render and draw content that needs to be displayed on a display screen. In some embodiments, the processor 1101 may further include an artificial intelligence (AI) processor. The AI processor is configured to process computing operations related to machine learning.

The memory 1102 may include one or more computer-readable storage media. The computer-readable storage medium may be non-transient. The memory 1102 may further include a high-speed random access memory and a nonvolatile memory, for example, one or more disk storage devices or flash storage devices. In some embodiments, the non-transitory computer-readable storage medium in the memory 1102 is configured to store at least one instruction. The at least one instruction is executed by the processor 1101 to implement the method for obtaining a position of a target provided in the method embodiments of the present disclosure.

In some embodiments, the terminal 1100 may include: a peripheral interface 1103 and at least one peripheral. The processor 1101, the memory 1102, and the peripheral interface 1103 may be connected to each other through a bus or a signal cable. Each peripheral may be connected to the peripheral interface 1103 through a bus, a signal cable, or a circuit board. Specifically, the peripheral includes: at least one of a radio frequency circuit 1104, a display screen 1105, a camera component 1106, an audio circuit 1107, a positioning component 1108, and a power supply 1109.

The peripheral interface 1103 may be configured to connect the at least one peripheral related to input/output (I/O) to the processor 1101 and the memory 1102. In some embodiments, the processor 1101, the memory 1102 and the peripheral device interface 1103 are integrated on the same chip or circuit board. In some other embodiments, any one or two of the processor 1101, the memory 1102, and the peripheral device interface 1103 may be implemented on a single chip or circuit board. This is not limited in this embodiment.

The radio frequency circuit 1104 is configured to receive and transmit a radio frequency (RF) signal, also referred to as an electromagnetic signal. The RF circuit 1104 communicates with a communication network and other communication devices through the electromagnetic signal. The RF circuit 1104 converts an electrical signal into an electromagnetic signal for transmission, or converts a received electromagnetic signal into an electrical signal. Optionally, the RF circuit 1104 includes: an antenna system, an RF transceiver, one or more amplifiers, a tuner, an oscillator, a digital signal processor, a codec chip set, a subscriber identity module card, and the like. The RF circuit 1104 may communicate with another terminal by using at least one wireless communication protocol. The wireless communication protocol includes, but is not limited to, a metropolitan area network, generations of mobile communication networks (2G, 3G, 4G, and 5G), a wireless local area network, and/or a wireless fidelity (Wi-Fi) network. In some embodiments, the RF 1104 may further include a circuit related to near field communication (NFC), which is not limited in the present disclosure.

The display screen 1105 is configured to display a user interface (UI). The UI may include a graph, text, an icon, a video, and any combination thereof. When the display screen 1105 is a touch display screen, the display screen 1105 further has a capability of acquiring a touch signal on or above a surface of the display screen 1105. The touch signal may be inputted to the processor 1101 as a control signal for processing. In this case, the display screen 1105 may be further configured to provide a virtual button and/or a virtual keyboard that are/is also referred to as a soft button and/or a soft keyboard. In some embodiments, there may be one display screen 1105, disposed on a front panel of the terminal 1100. In some other embodiments, there may be at least two display screens 1105, respectively disposed on different surfaces of the terminal 1100 or designed in a foldable form. In still some other embodiments, the display screen 1105 may be a flexible display screen, disposed on a curved surface or a folded surface of the terminal 1100. Even, the display screen 1105 may be further designed in a non-rectangular irregular pattern, namely, an irregular screen. The display screen 1105 may be prepared by using materials such as a liquid crystal display (LCD), an organic light-emitting diode (OLED), or the like.

The camera component 1106 is configured to capture images or videos. Optionally, the camera component 1106 includes a front-facing camera and a rear-facing camera. Generally, the front-facing camera is disposed on the front panel of the terminal, and the rear-facing camera is disposed on a back surface of the terminal. In some embodiments, there are at least two rear cameras, which are any of a main camera, a depth-of-field camera, a wide-angle camera, and a telephoto camera, to achieve background blur through fusion of the main camera and the depth-of-field camera, achieve panoramic photographing and virtual reality (VR) photographing through fusion of the main camera and the wide-angle camera, or other fusion photographing functions. In some embodiments, the camera component 1106 may further include a flash. The flash may be a monochrome temperature flash, or may be a double color temperature flash. The double color temperature flash refers to a combination of a warm light flash and a cold light flash, and may be used for light compensation under different color temperatures.

The audio circuit 1107 may include a microphone and a speaker. The microphone is configured to acquire sound waves of a user and an environment, and convert the sound waves into an electrical signal to input to the processor 1101 for processing, or input to the radio frequency circuit 1104 for implementing voice communication. For the purpose of stereo acquisition or noise reduction, there may be multiple microphones, respectively disposed at different portions of the terminal 1100. The microphone may be an array microphone or an omni-directional acquisition microphone. The speaker is configured to convert electric signals from the processor 1101 or the radio frequency circuit 1104 into sound waves. The speaker may be a conventional film speaker, or may be a piezoelectric ceramic speaker. In a case that the speaker is the piezoelectric ceramic speaker, the speaker not only can convert an electric signal into acoustic waves audible to a human being, but also can convert an electric signal into acoustic waves inaudible to a human being, for ranging and other purposes. In some embodiments, the audio circuit 1107 may further include an earphone jack.

The positioning component 1108 is configured to determine a current geographic location of the terminal 1100, to implement a navigation or a location based service (LBS). The positioning component 1108 may be a positioning component based on the Global Positioning System (GPS) of the United States, the BeiDou system of China, the GLONASS System of Russia, or the GALILEO System of the European Union.

The power supply 1109 is configured to supply power to components in the terminal 1100. The power supply 1109 may be an alternating current, a direct current, a primary battery, or a rechargeable battery. In a case that the power supply 1109 includes the rechargeable battery, the rechargeable battery may support wired charging or wireless charging. The rechargeable battery may be further configured to support a fast charging technology.

In some embodiments, the terminal 1100 further includes one or more sensors 1110. The one or more sensors 1110 include, but are not limited to: an acceleration sensor 1111, a gyroscope sensor 1112, a pressure sensor 1113, a fingerprint sensor 1114, an optical sensor 1115, and a proximity sensor 1116.

The acceleration sensor 1111 may detect a magnitude of acceleration on three coordinate axes of a coordinate system established with reference to the terminal 1100. For example, the acceleration sensor 1111 may be configured to detect components of gravity acceleration on the three coordinate axes. The processor 1101 may control, according to a gravity acceleration signal collected by the acceleration sensor 1111, the display screen 1105 to display the user interface in a transverse view or a portrait view. The acceleration sensor 1111 may be further configured to acquire motion data of a game or a user.

The gyroscope sensor 1112 may detect a body direction and a rotation angle of the terminal 1100. The gyroscope sensor 1112 may cooperate with the acceleration sensor 1111 to acquire a 3D action on the terminal 1100 by the user. The processor 1101 may implement the following functions according to the data acquired by the gyroscope sensor 1112: motion sensing (such as changing the UI according to a tilt operation of the user), image stabilization at shooting, game control, and inertial navigation.

The pressure sensor 1113 may be disposed at a side frame of the terminal 1100 and/or a lower layer of the display screen 1105. When the pressure sensor 1113 is disposed at the side frame of the terminal 1100, a holding signal of the user on the terminal 1100 may be detected. The processor 1101 performs left and right hand recognition or a quick operation according to the holding signal acquired by the pressure sensor 1113. When the pressure sensor 1113 is disposed on the low layer of the display screen 1105, the processor 1101 controls, according to a pressure operation of the user on the display screen 1105, an operable control on the UI. The operable control includes at least one of a button control, a scroll-bar control, an icon control, and a menu control.

The fingerprint sensor 1114 is configured to acquire a fingerprint of a user, and the processor 1101 identifies an identity of the user according to the fingerprint acquired by the fingerprint sensor 1114; or the fingerprint sensor 1114 identifies an identity of the user according to the acquired fingerprint. When the identity of the user is determined as a trusted identity, the processor 1101 authorizes the user to perform related sensitive operations. The sensitive operations include: unlocking a screen, viewing encrypted information, downloading software, paying, changing a setting, and the like. The fingerprint sensor 1114 may be disposed on a front surface, a back surface, or a side surface of the terminal 1100. When a physical button or a vendor logo is disposed on the terminal 1100, the fingerprint sensor 1114 may be integrated with the physical button or the vendor logo.

The optical sensor 1115 is configured to acquire ambient light intensity. In an embodiment, the processor 1101 may control display luminance of the display screen 1105 according to the ambient light intensity collected by the optical sensor 1115. Specifically, when the ambient light intensity is relatively high, the display luminance of the display screen 1105 is increased. When the ambient light intensity is relatively low, the display luminance of the display screen 1105 is reduced. In another embodiment, the processor 1101 may further dynamically adjust a camera parameter of the camera component 1106 according to the ambient light intensity acquired by the optical sensor 1115.

The proximity sensor 1116, also referred to as a distance sensor, is usually disposed on the front panel of the terminal 1100. The proximity sensor 1116 is configured to acquire a distance between the user and the front surface of the terminal 1100. In an embodiment, when the proximity sensor 1116 detects that the distance between the user and the front surface of the terminal 1100 gradually becomes smaller, the display screen 1105 is controlled by the processor 1101 to switch from a screen-on state to a screen-off state. In a case that the proximity sensor 1116 detects that the distance between the user and the front surface of the terminal 1100 gradually becomes larger, the display screen 1105 is controlled by the processor 1101 to switch from the screen-off state to the screen-on state.

A person skilled in the art may understand that the structure shown in Figure 11 constitutes no limitation on the terminal 1100, and the terminal may include more or fewer components than those shown in the figure, or some components may be combined, or the components may be deployed in different manners.

Figure 12 is a schematic structural diagram of a server according to an embodiment of the present disclosure. The structure of the server 1200 may vary greatly for different configurations or performances, and may include one or more central processing units (CPU) 1201 and one or more memories 1202. The one or more memories 1202 store at least one instruction, and the at least one instruction is loaded and executed by the one or more processors 1201 to implement the method for obtaining a position of a target provided in the foregoing various method embodiments. Certainly, the server 1200 may also have a wired or wireless network interface, a keyboard, an input/output interface and other components to facilitate input/output. The server 1200 may also include other components for implementing device functions. Details are not described herein.

In an exemplary embodiment, a computer-readable storage medium is further provided, for example, a memory storing instructions. The instructions may be executed by a processor to complete the method for obtaining a position of a target in the foregoing embodiments. For example, the computer-readable storage medium may be a read-only memory (ROM), a random access memory (RAM), a compact disc ROM (CD-ROM), a magnetic tape, a floppy disk, an optical data storage device, or the like.

A person of ordinary skill in the art may understand that all or some of the steps of the foregoing embodiments may be implemented by hardware, or may be implemented by a program instructing relevant hardware. The program may be stored in a computer-readable storage medium. The storage medium may be a read-only memory, a magnetic disk, an optical disc, or the like.

## Claims

1. A method for obtaining a position of a target, comprising:

   obtaining (701) a plurality of frames of images, wherein a first image in the plurality of frames of images comprises a to-be-detected target, and the first image is any frame of image in the plurality of frames of images;
   invoking (702) a position obtaining model, wherein a model parameter of the position obtaining model is obtained through training based on a first position of a selected target in a first sample image in a plurality of frames of sample images and a second position of the selected target in the first sample image, the second position is predicted based on a third position of the selected target in a second sample image in the plurality of frames of sample images, the third position is predicted based on the first position, the selected target is randomly selected from the first sample image, the second sample image is different from the first sample image in the plurality of frames of sample images; and
   determining (703) a position of the to-be-detected target in a second image based on the model parameter and a position of the to-be-detected target in the first image by using the position obtaining model, wherein the second image is different from the first image in the plurality of frames of images,
   wherein the determining a position of the to-be-detected target in a second image based on the model parameter and a position of the to-be-detected target in the first image by using the position obtaining model comprises:

   obtaining an image processing parameter based on the position of the to-be-detected target in the first image, the first image, and the model parameter; and
   processing the second image based on the image processing parameter, to output the position of the to-be-detected target in the second image;
   **characterized in that** the obtaining an image processing parameter based on the position of the to-be-detected target in the first image, the first image, and the model parameter comprises:

   generating position indication information corresponding to the first image based on the position of the to-be-detected target in the first image, wherein the position indication information corresponding to the first image indicates a selected position of the to-be-detected target in the first image; and
   obtaining the image processing parameter based on the position indication information of the first image, the first image and the model parameter;
   wherein the processing the second image based on the image processing parameter, to output the position of the to-be-detected target in the second image comprises:
   processing the second image based on the image processing parameter, to output position indication information of the second image, wherein the position indication information of the second image indicates a predicted position of the to-be-detected target in the second image.

2.  The method according to claim 1, wherein the obtaining the image processing parameter based on the position indication information of the first image, the first image, and the model parameter comprises:

    performing feature extraction on the first image based on the model parameter, to obtain an image feature of the first image; and
    obtaining the image processing parameter based on the image feature of the first image and the position indication information of the first image,
    wherein the processing the second image based on the image processing parameter, to output position indication information of the second image comprises:

        performing feature extraction on the second image based on the model parameter, to obtain an image feature of the second image; and
        processing the image feature of the second image based on the image processing parameter, to output the position indication information of the second image.

3.  The method according to claim 1, wherein training the position obtaining model comprises:

    obtaining a plurality of frames of sample images;
    invoking an initial model; randomly selecting, by using the initial model, a target area in the first sample image in the plurality of frames of sample images as the selected target; obtaining the third position of the selected target in the second sample image based on the first position of the selected target in the first sample image, the first sample image, and the second sample image; and obtaining the second position of the selected target in the first sample image based on the third position of the selected target in the second sample image, the first sample image, and the second sample image;
    obtaining an error value of the second position relative to the first position based on the first position and the second position of the selected target in the first sample image; and
    adjusting a model parameter of the initial model based on the error value until a target condition is met, to obtain the position obtaining model.

4.  The method according to claim 3, wherein the obtaining the third position of the selected target in the second sample image based on the first position of the selected target in the first sample image, the first sample image, and the second sample image comprises:

    obtaining a first image processing parameter based on the first position and the first sample image; and
    processing the second sample image based on the first image processing parameter, to obtain the third position,
    wherein the obtaining the second position of the selected target in the first sample image based on the third position of the selected target in the second sample image, the first sample image, and the second sample image comprises:

        obtaining a second image processing parameter based on the third position and the second sample image; and
        processing the first sample image based on the second image processing parameter, to obtain the second position.

5.  The method according to claim 4, wherein the obtaining a first image processing parameter based on the first position and the first sample image comprises:

    performing feature extraction on the first sample image based on the model parameter of the initial model, to obtain an image feature of the first sample image; and
    obtaining the first image processing parameter based on the image feature of the first sample image and the first position,
    wherein the processing the second sample image based on the first image processing parameter, to obtain the third position comprises:

performing feature extraction on the second sample image based on the model parameter of the initial model, to obtain an image feature of the second sample image; and

processing the image feature of the second sample image based on the first image processing parameter, to obtain the third position.

**6.** The method according to any one of claims 3 to 5,
wherein the obtaining the third position of the selected target in the second sample image based on the first position of the selected target in the first sample image, the first sample image, and the second sample image comprises:

generating first position indication information of the first sample image based on the first position, wherein the first position indication information indicates a selected position of the selected target in the first sample image; and obtaining position indication information of the second sample image based on the first position indication information, the first sample image, and the second sample image, wherein the position indication information of the second sample image indicates a predicted position of the selected target in the second sample image,

wherein the obtaining the second position of the selected target in the first sample image based on the third position of the selected target in the second sample image, the first sample image, and the second sample image comprises:

obtaining second position indication information of the first sample image based on the position indication information of the second sample image, the first sample image, and the second sample image, wherein the second position indication information indicates a predicted position of the selected target in the first sample image.

**7.** The method according to claim 3, wherein the plurality of frames of sample images comprise a plurality of sample image sets, each of the plurality of sample image sets comprises one frame of first sample image and at least one frame of second sample image, and corresponds to one error value;
wherein the adjusting a model parameter of the initial model based on the error value comprises:
adjusting, for a target quantity of sample image sets in the plurality of sample image sets, the model parameter of the initial model based on a plurality of error values corresponding to the target quantity of sample image sets.

**8.** The method according to claim 7, wherein the adjusting the model parameter of the initial model based on a plurality of error values corresponding to the target quantity of sample image sets comprises:

removing error values meeting an error value condition from the plurality of error values corresponding to the target quantity of sample image sets; and adjusting the model parameter of the initial model based on remaining error values; or
determining first weights for the plurality of error values corresponding to the target quantity of sample image sets; and adjusting the model parameter of the initial model based on the first weights of the plurality of error values and the plurality of error values, wherein first weights of error values meeting the error value condition in the plurality of error values are zero.

**9.** The method according to claim 7 or 8, wherein each sample image set corresponds to a second weight;
wherein the adjusting the model parameter of the initial model based on a plurality of error values corresponding to the target quantity of sample image sets comprises:

obtaining a second weight for an error value of each sample image set, wherein the second weight is positively correlated with a displacement of the selected target in each sample image set in the plurality of frames of sample images; and
adjusting the model parameter of the initial model based on the plurality of error values corresponding to the target quantity of sample image sets and a plurality of second weights.

**10.** An apparatus for obtaining a position of a target, comprising:

an image obtaining module (901), configured to obtain a plurality of frames of images, wherein a first image in the plurality of frames of images comprises a to-be-detected target, the first image is any frame of image in the plurality of frames of images;
a model invoking module (902), configured to invoke a position obtaining model, wherein a model parameter of the position obtaining model is obtained through training based on a first position of a selected target in a first sample image in a plurality of frames of sample images and a second position of the selected target in the first sample image, the second position is predicted based on a third position of the selected target in a second sample image in the plurality of frames of sample images, the third position is predicted based on the first position, the selected target is randomly selected from the first sample image, the second sample image is different from the first sample image in the plurality of frames of sample images; and

a position obtaining module (903), configured to determine a position of the to-be-detected target in a second image based on the model parameter and a position of the to-be-detected target in the first image by using the position obtaining model, wherein the second image is different from the first image in the plurality of frames of images,

wherein the determining a position of the to-be-detected target in the second image based on the model parameter and a position of the to-be-detected target in the first image by using the position obtaining model comprises:

> obtaining an image processing parameter based on the position of the to-be-detected target in the first image, the first image, and the model parameter; and
>
> processing the second image based on the image processing parameter, to output the position of the to-be-detected target in the second image,
>
> **characterized in that** the obtaining an image processing parameter based on the position of the to-be-detected target in the first image, the first image, and the model parameter comprises:
>
>> generating position indication information corresponding to the first image based on the position of the to-be-detected target in the first image, wherein the position indication information corresponding to the first image indicates a selected position of the to-be-detected target in the first image; and
>>
>> obtaining an image processing parameter based on the position indication information of the first image, the first image and the model parameter;
>>
>> wherein the processing the second image based on the image processing parameter, to output the position of the to-be-detected target in the second image comprises:
>>
>> processing the second image based on the image processing parameter, to output position indication information of the second image, wherein the position indication information of the second image indicates a predicted position of the to-be-detected target in the second image.

11. A computer device, comprising: one or more processors; and one or more memories storing at least one instruction, wherein the instruction is loaded and executed by the one or more processors to implement operations of the method for obtaining a position of a target according to any one of claims 1 to 9.

12. Computer-readable storage medium, storing at least one instruction, wherein the instruction is loaded and executed by a processor to implement operations of the method for obtaining a position of a target according to any one of claims 1 to 9.

**Patentansprüche**

1. Verfahren zum Erhalten einer Position eines Ziels, das Folgendes umfasst:

Erhalten (701) einer Vielzahl von Frames von Bildern, wobei ein erstes Bild der Vielzahl von Frames von Bildern ein zu detektierendes Ziel umfasst, und das erste Bild ein beliebiger Frame eines Bildes der Vielzahl von Frames von Bildern ist;

Aufrufen (702) eines Positionserhaltungsmodells, wobei ein Modellparameter des Positionserhaltungsmodells durch Trainieren auf Basis einer ersten Position eines ausgewählten Ziels in einem ersten Beispielbild einer Vielzahl von Frames von Beispielbildern und einer zweiten Position des ausgewählten Ziels im ersten Beispielbild erhalten wird, wobei die zweite Position auf Basis einer dritten Position des ausgewählten Ziels in einem zweiten Beispielbild der Vielzahl von Frames von Beispielbildern vorhergesagt wird, die dritte Position auf Basis der ersten Position vorhergesagt wird, das ausgewählte Ziel willkürlich aus dem ersten Beispielbild ausgewählt wird, das zweite Beispielbild sich vom ersten Beispielbild der Vielzahl von Frames von Beispielbildern unterscheidet; und

Bestimmen (703) einer Position des zu detektierenden Ziels in einem zweiten Bild auf Basis des Modellparameters und einer Position des zu detektierenden Ziels im ersten Bild unter Verwendung des Positionserhaltungsmodells, wobei sich das zweite Bild vom ersten Bild der Vielzahl von Frames von Bildern unterscheidet,

wobei das Bestimmen einer Position des zu detektierenden Ziels in einem zweiten Bild auf Basis des Modellparameters und einer Position des zu detektierenden Ziels im ersten Bild unter Verwendung des Positionserhaltungsmodells Folgendes umfasst:

Erhalten eines Bildverarbeitungsparameters auf Basis der Position des zu detektierenden Ziels im ersten Bild, des ersten Bildes und des Modellparameters; und

Verarbeiten des zweiten Bildes auf Basis des Bildverarbeitungsparameters, um die Position des zu detektierenden Ziels im zweiten Bild auszugeben;

**dadurch gekennzeichnet, dass** das Erhalten eines Bildverarbeitungsparameters auf Basis der Position des zu detektierenden Ziels im ersten Bild, des ersten Bildes und des Modellparameters Folgendes umfasst:

Erzeugen von Positionsanzeigeinformationen, die dem ersten Bild entsprechen, auf Basis der Position des zu detektierenden Ziels im ersten Bild, wobei die Positionsanzeigeinformationen, die dem ersten Bild entsprechen, eine ausgewählte Position des zu detektierenden Ziels im ersten Bild anzeigen; und

Erhalten des Bildverarbeitungsparameters auf Basis der Positionsanzeigeinformationen des ersten Bildes, des ersten Bildes und des Modellparameters;

wobei das Verarbeiten des zweiten Bildes auf Basis des Bildverarbeitungsparameters, um die Position des zu detektierenden Ziels im zweiten Bild auszugeben, Folgendes umfasst:

Verarbeiten des zweiten Bildes auf Basis des Bildverarbeitungsparameters, um Positionsanzeigeinformationen des zweiten Bildes auszugeben, wobei die Positionsanzeigeinformationen des zweiten Bildes eine vorhergesagte Position des zu detektierenden Ziels im zweiten Bild anzeigen.

2. Verfahren nach Anspruch 1,
wobei das Erhalten des Bildverarbeitungsparameters auf Basis der Positionsanzeigeinformationen des ersten Bildes, des ersten Bildes und des Modellparameters Folgendes umfasst:

Durchführen einer Merkmalsextraktion am ersten Bild auf Basis des Modellparameters, um ein Bildmerkmal des ersten Bildes zu erhalten; und

Erhalten des Bildverarbeitungsparameters auf Basis des Bildmerkmals des ersten Bildes und der Positionsanzeigeinformationen im ersten Bild,

wobei das Verarbeiten des zweiten Bildes auf Basis des Bildverarbeitungsparameters, um Positionsanzeigeinformationen des zweiten Bildes auszugeben, Folgendes umfasst:

Durchführen einer Merkmalsextraktion am zweiten Bild auf Basis des Modellparameters, um ein Bildmerkmal des zweiten Bildes zu erhalten; und

Verarbeiten des Bildmerkmals des zweiten Bildes auf Basis des Bildverarbeitungsparameters, um die Positionsanzeigeinformationen des zweiten Bildes auszugeben.

3. Verfahren nach Anspruch 1, wobei das Trainieren des Positionserhaltungsmodells Folgendes umfasst:

Erhalten einer Vielzahl von Frames von Beispielbildern;

Aufrufen eines anfänglichen Modells; willkürliches Auswählen eines Zielbereichs im ersten Beispielbild der Vielzahl von Frames von Beispielbildern als das ausgewählte Ziel unter Verwendung des anfänglichen Modells;

Erhalten der dritten Position des ausgewählten Ziels im zweiten Beispielbild auf Basis der ersten Position des ausgewählten Ziels im ersten Beispielbild, des ersten Beispielbildes und des zweiten Beispielbildes; und Erhalten der zweiten Position des ausgewählten Ziels im ersten Beispielbild auf Basis der dritten Position des ausgewählten Ziels im zweiten Beispielbild, des ersten Beispielbildes und des zweiten Beispielbildes;

Erhalten eines Fehlerwertes der zweiten Position relativ zur ersten Position auf Basis der ersten Position und der zweiten Position des ausgewählten Ziels im ersten Beispielbild; und

Anpassen eines Modellparameters des anfänglichen Modells auf Basis des Fehlerwertes, bis eine Zielbedingung erfüllt ist, um das Positionserhaltungsmodell zu erhalten.

4. Verfahren nach Anspruch 3,
wobei das Erhalten der dritten Position des ausgewählten Ziels im zweiten Beispielbild auf Basis der ersten Position des ausgewählten Ziels im ersten Beispielbild, des ersten Beispielbildes und des zweiten Beispielbildes Folgendes umfasst:

Erhalten eines ersten Bildverarbeitungsparameters auf Basis der ersten Position und des ersten Beispielbildes;

und
Verarbeiten des zweiten Beispielbildes auf Basis des ersten Bildverarbeitungsparameters, um die dritte Position zu erhalten,
wobei das Erhalten der zweiten Position des ausgewählten Ziels im ersten Beispielbild auf Basis der dritten Position des ausgewählten Ziels im zweiten Beispielbild, des ersten Beispielbildes und des zweiten Beispielbildes Folgendes umfasst:

Erhalten eines zweiten Bildverarbeitungsparameters auf Basis der dritten Position und des zweiten Beispielbildes; und
Verarbeiten des ersten Beispielbildes auf Basis des zweiten Bildverarbeitungsparameters, um die zweite Position zu erhalten.

5. Verfahren nach Anspruch 4,
wobei das Erhalten eines ersten Bildverarbeitungsparameters auf Basis der ersten Position und des ersten Beispielbildes Folgendes umfasst:

Durchführen einer Merkmalsextraktion am ersten Beispielbild auf Basis des Modellparameters des anfänglichen Modells, um ein Bildmerkmal des ersten Beispielbildes zu erhalten; und
Erhalten des ersten Bildverarbeitungsparameters auf Basis des Bildmerkmals des ersten Beispielbildes und der ersten Position,
wobei das Verarbeiten des zweiten Beispielbildes auf Basis des ersten Bildverarbeitungsparameters, um die dritte Position zu erhalten, Folgendes umfasst:

Durchführen einer Merkmalsextraktion am zweiten Beispielbild auf Basis des Modellparameters des anfänglichen Modells, um ein Bildmerkmal des zweiten Beispielbildes zu erhalten; und
Verarbeiten des Bildmerkmals des zweiten Beispielbildes auf Basis des ersten Bildverarbeitungsparameters, um die dritte Position zu erhalten.

6. Verfahren nach einem der Ansprüche 3 bis 5,
wobei das Erhalten der dritten Position des ausgewählten Ziels im zweiten Beispielbild auf Basis der ersten Position des ausgewählten Ziels im ersten Beispielbild, des ersten Beispielbildes und des zweiten Beispielbildes Folgendes umfasst:

Erzeugen von ersten Positionsanzeigeinformationen des ersten Beispielbildes auf Basis der ersten Position, wobei die ersten Positionsanzeigeinformationen eine ausgewählte Position des ausgewählten Ziels im ersten Beispielbild anzeigen; und
Erhalten von Positionsanzeigeinformationen des zweiten Beispielbildes auf Basis der ersten Positionsanzeigeinformationen, des ersten Beispielbildes und des zweiten Beispielbildes, wobei die Positionsanzeigeinformationen des zweiten Beispielbildes eine vorhergesagte Position des ausgewählten Ziels im zweiten Beispielbild anzeigen,
wobei das Erhalten der zweiten Position des ausgewählten Ziels im ersten Beispielbild auf Basis der dritten Position des ausgewählten Ziels im zweiten Beispielbild, des ersten Beispielbildes und des zweiten Beispielbildes Folgendes umfasst:
Erhalten von zweiten Positionsanzeigeinformationen des ersten Beispielbildes auf Basis der Positionsanzeigeinformationen des zweiten Beispielbildes, des ersten Beispielbildes und des zweiten Beispielbildes, wobei die zweiten Positionsanzeigeinformationen eine vorhergesagte Position des ausgewählten Ziels im ersten Beispielbild anzeigen.

7. Verfahren nach Anspruch 3, wobei die Vielzahl von Frames von Beispielbildern eine Vielzahl von Beispielbildsätzen umfassen, wobei jeder der Vielzahl von Beispielbildsätzen einen Frame des ersten Beispielbildes und mindestens einen Frame des zweiten Beispielbildes umfasst und einem Fehlerwert entspricht;
wobei das Anpassen eines Modellparameters des anfänglichen Modells auf Basis des Fehlerwertes Folgendes umfasst:
Anpassen des Modellparameters des anfänglichen Modells auf Basis einer Vielzahl von Fehlerwerten, die einer Zielmenge von Beispielbildsätzen entsprechen, für die Zielmenge von Beispielbildsätzen der Vielzahl von Beispielbildsätzen.

8. Verfahren nach Anspruch 7, wobei das Anpassen des Modellparameters des anfänglichen Modells auf Basis einer Vielzahl von Fehlerwerten, die der Zielmenge von Beispielbildsätzen entsprechen, Folgendes umfasst:

Entfernen von Fehlerwerten, die eine Fehlerwertbedingung erfüllen, aus der Vielzahl von Fehlerwerten, die der Zielmenge von Beispielbildsätzen entsprechen; und Anpassen des Modellparameters des anfänglichen Modells auf Basis der verbleibenden Fehlerwerte; oder

Bestimmen von ersten Gewichtungen für die Vielzahl von Fehlerwerten, die der Zielmenge von Beispielbildsätzen entsprechen; und Anpassen des Modellparameters des anfänglichen Modells auf Basis der ersten Gewichtungen der Vielzahl von Fehlerwerten und der Vielzahl von Fehlerwerten, wobei erste Gewichtungen von Fehlerwerten, die die Fehlerwertbedingung erfüllen, der Vielzahl von Fehlerwerten null sind.

9. Verfahren nach Anspruch 7 oder 8, wobei jeder Beispielbildsatz einer zweiten Gewichtung entspricht; wobei das Anpassen des Modellparameters des anfänglichen Modells auf Basis einer Vielzahl von Fehlerwerten, die der Zielmenge von Beispielbildsätzen entsprechen, Folgendes umfasst:

Erhalten einer zweiten Gewichtung für einen Fehlerwert von jedem Beispielbildsatz, wobei die zweite Gewichtung mit einem Versatz des ausgewählten Ziels in jedem Beispielbildsatz der Vielzahl von Frames von Beispielbildern positiv korreliert; und

Anpassen des Modellparameters des anfänglichen Modells auf Basis der Vielzahl von Fehlerwerten, die der Zielmenge von Beispielbildsätzen entsprechen, und einer Vielzahl von zweiten Gewichtungen.

10. Einrichtung zum Erhalten einer Position, die Folgendes umfasst:

ein Bilderhaltungsmodul (901), das dazu ausgelegt ist, eine Vielzahl von Frames von Bildern zu erhalten, wobei ein erstes Bild der Vielzahl von Frames von Bildern ein zu detektierendes Ziel umfasst, das erste Bild ein beliebiger Frame eines Bildes der Vielzahl von Frames von Bildern ist;

ein Modellaufrufmodul (902), das dazu ausgelegt ist, ein Positionserhaltungsmodell aufzurufen, wobei ein Modellparameter des Positionserhaltungsmodells durch Trainieren auf Basis einer ersten Position eines ausgewählten Ziels in einem ersten Beispielbild einer Vielzahl von Frames von Beispielbildern und einer zweiten Position des ausgewählten Ziels im ersten Beispielbild erhalten wird, wobei die zweite Position auf Basis einer dritten Position des ausgewählten Ziels in einem zweiten Beispielbild der Vielzahl von Frames von Beispielbildern vorhergesagt wird, die dritte Position auf Basis der ersten Position vorhergesagt wird, das ausgewählte Ziel willkürlich aus dem ersten Beispielbild ausgewählt wird, das zweite Beispielbild sich vom ersten Beispielbild der Vielzahl von Frames von Beispielbildern unterscheidet; und

ein Positionserhaltungsmodul (903), das dazu ausgelegt ist, eine Position des zu detektierenden Ziels in einem zweiten Bild auf Basis des Modellparameters und einer Position des zu detektierenden Ziels im ersten Bild unter Verwendung des Positionserhaltungsmodells zu bestimmen, wobei sich das zweite Bild vom ersten Bild der Vielzahl von Frames von Bildern unterscheidet,

wobei das Bestimmen einer Position des zu detektierenden Ziels im zweiten Bild auf Basis des Modellparameters und einer Position des zu detektierenden Ziels im ersten Bild unter Verwendung des Positionserhaltungsmodells Folgendes umfasst:

Erhalten eines Bildverarbeitungsparameters auf Basis der Position des zu detektierenden Ziels im ersten Bild, des ersten Bildes und des Modellparameters; und

Verarbeiten des zweiten Bildes auf Basis des Bildverarbeitungsparameters, um die Position des zu detektierenden Ziels im zweiten Bild auszugeben,

**dadurch gekennzeichnet, dass** das Erhalten eines Bildverarbeitungsparameters auf Basis der Position des zu detektierenden Ziels im ersten Bild, des ersten Bildes und des Modellparameters Folgendes umfasst:

Erzeugen von Positionsanzeigeinformationen, die dem ersten Bild entsprechen, auf Basis der Position des zu detektierenden Ziels im ersten Bild, wobei die Positionsanzeigeinformationen, die dem ersten Bild entsprechen, eine ausgewählte Position des zu detektierenden Ziels im ersten Bild anzeigen; und

Erhalten eines Bildverarbeitungsparameters auf Basis der Positionsanzeigeinformationen des ersten Bildes, des ersten Bildes und des Modellparameters;

wobei das Verarbeiten des zweiten Bildes auf Basis des Bildverarbeitungsparameters, um die Position des zu detektierenden Ziels im zweiten Bild auszugeben, Folgendes umfasst:

Verarbeiten des zweiten Bildes auf Basis des Bildverarbeitungsparameters, um Positionsanzeigeinformationen des zweiten Bildes auszugeben, wobei die Positionsanzeigeinformationen des zweiten Bildes eine vorhergesagte Position des zu detektierenden Ziels im zweiten Bild anzeigen.

**11.** Computervorrichtung, die Folgendes umfasst: einen oder mehrere Prozessoren; und einen oder mehrere Speicher, in dem mindestens eine Anweisung gespeichert ist, wobei die Anweisung von dem einen oder den mehreren Prozessoren geladen und ausgeführt wird, um Operationen des Verfahrens zum Erhalten einer Position eines Ziels nach einem der Ansprüche 1 bis 9 zu implementieren.

**12.** Computerlesbares Speichermedium, auf dem mindestens eine Anweisung gespeichert ist, wobei die Anweisung von einem Prozessor geladen und ausgeführt wird, um Operationen des Verfahrens zum Erhalten einer Position eines Ziels nach einem der Ansprüche 1 bis 9 zu implementieren.

**Revendications**

**1.** Procédé pour obtenir une position d'une cible, comprenant :

l'obtention (701) d'une pluralité de trames d'images, dans lequel une première image de la pluralité de trames d'images comprend une cible à détecter, et la première image est une trame d'image quelconque de la pluralité de trames d'images ;
l'invocation (702) d'un modèle d'obtention de position, dans lequel un paramètre de modèle du modèle d'obtention de position est obtenu par apprentissage sur la base d'une première position d'une cible sélectionnée dans une première image échantillon d'une pluralité de trames d'images échantillons et d'une deuxième position de la cible sélectionnée dans la première image échantillon, la deuxième position est prédite sur la base d'une troisième position de la cible sélectionnée dans une deuxième image échantillon de la pluralité de trames d'images échantillons, la troisième position est prédite sur la base de la première position, la cible sélectionnée est sélectionnée de manière aléatoire dans la première image échantillon, la deuxième image échantillon est différente de la première image échantillon de la pluralité de trames d'images échantillons ; et
la détermination (703) d'une position de la cible à détecter dans une deuxième image sur la base du paramètre de modèle et d'une position de la cible à détecter dans la première image en utilisant le modèle d'obtention de position, dans lequel la deuxième image est différente de la première image de la pluralité de trames d'images, dans lequel la détermination d'une position de la cible à détecter dans une deuxième image sur la base du paramètre de modèle et d'une position de la cible à détecter dans la première image en utilisant le modèle d'obtention de position comprend :

l'obtention d'un paramètre de traitement d'image sur la base de la position de la cible à détecter dans la première image, de la première image et du paramètre de modèle ; et
le traitement de la deuxième image sur la base du paramètre de traitement d'image afin de délivrer la position de la cible à détecter dans la deuxième image ;
**caractérisé en ce que** l'obtention d'un paramètre de traitement d'image sur la base de la position de la cible à détecter dans la première image, de la première image et du paramètre de modèle comprend :

la génération d'informations d'indication de position correspondant à la première image sur la base de la position de la cible à détecter dans la première image, dans lequel les informations d'indication de position correspondant à la première image indiquent une position sélectionnée de la cible à détecter dans la première image ; et
l'obtention du paramètre de traitement d'image sur la base des informations d'indication de position de la première image, de la première image et du paramètre de modèle ;
dans lequel le traitement de la deuxième image sur la base du paramètre de traitement d'image afin de délivrer la position de la cible à détecter dans la deuxième image comprend :
le traitement de la deuxième image sur la base du paramètre de traitement d'image pour délivrer des informations d'indication de position de la deuxième image, dans lequel les informations d'indication de position de la deuxième image indiquent une position prédite de la cible à détecter dans la deuxième image.

**2.** Procédé selon la revendication 1,
dans lequel l'obtention du paramètre de traitement d'image sur la base des informations d'indication de position de la première image, de la première image et du paramètre de modèle comprend :

la réalisation d'une extraction de caractéristiques sur la première image sur la base du paramètre de modèle afin d'obtenir une caractéristique d'image de la première image ; et

l'obtention du paramètre de traitement d'image sur la base de la caractéristique d'image de la première image et des informations d'indication de position de la première image,

dans lequel le traitement de la deuxième image sur la base du paramètre de traitement d'image pour délivrer des informations d'indication de position de la deuxième image comprend :

la réalisation d'une extraction de caractéristiques sur la deuxième image sur la base du paramètre de modèle afin d'obtenir une caractéristique d'image de la deuxième image ; et

le traitement de la caractéristique d'image de la deuxième image sur la base du paramètre de traitement d'image afin de délivrer la informations d'indication de position de la deuxième image.

3. Procédé selon la revendication 1, dans lequel l'entraînement du modèle d'obtention de position comprend :

l'obtention d'une pluralité de trames d'images échantillons ;

l'invocation d'un modèle initial ; à l'aide du modèle initial, la sélection aléatoire d'une zone cible dans la première image échantillon de la pluralité de trames d'images échantillons comme cible sélectionnée ;

l'obtention de la troisième position de la cible sélectionnée dans la deuxième image échantillon sur la base de la première position de la cible sélectionnée dans la première image échantillon, de la première image échantillon et de la deuxième image échantillon ; et l'obtention de la deuxième position de la cible sélectionnée dans la première image échantillon sur la base de la troisième position de la cible sélectionnée dans la deuxième image échantillon, de la première image échantillon et de la deuxième image échantillon ;

l'obtention d'une valeur d'erreur de la deuxième position par rapport à la première position sur la base de la première position et de la deuxième position de la cible sélectionnée dans la première image échantillon ; et

l'ajustement d'un paramètre de modèle du modèle initial sur la base de la valeur d'erreur jusqu'à ce qu'une condition cible soit remplie afin d'obtenir le modèle d'obtention de position.

4. Procédé selon la revendication 3,
dans lequel l'obtention de la troisième position de la cible sélectionnée dans la deuxième image échantillon sur la base de la première position de la cible sélectionnée dans la première image échantillon, de la première image échantillon et de la deuxième image échantillon comprend :

l'obtention d'un premier paramètre de traitement d'image sur la base de la première position et de la première image échantillon ; et

le traitement de la deuxième image échantillon sur la base du premier paramètre de traitement d'image afin d'obtenir la troisième position,

dans lequel l'obtention de la deuxième position de la cible sélectionnée dans la première image échantillon sur la base de la troisième position de la cible sélectionnée dans la deuxième image échantillon, de la première image échantillon et de la deuxième image échantillon comprend :

l'obtention d'un deuxième paramètre de traitement d'image sur la base de la troisième position et de la deuxième image échantillon ; et

le traitement de la première image échantillon sur la base du deuxième paramètre de traitement d'image afin d'obtenir la deuxième position.

5. Procédé selon la revendication 4,
dans lequel l'obtention d'un premier paramètre de traitement d'image sur la base de la première position et de la première image échantillon comprend :

la réalisation d'une extraction de caractéristiques sur la première image échantillon sur la base du paramètre de modèle du modèle initial, afin d'obtenir une caractéristique d'image de la première image échantillon ; et

l'obtention du premier paramètre de traitement d'image sur la base de la caractéristique d'image de la première image échantillon et de la première position,

dans lequel le traitement de la deuxième image échantillon sur la base du premier paramètre de traitement d'image afin d'obtenir la troisième position comprend :

la réalisation d'une extraction de caractéristiques sur la deuxième image échantillon sur la base du paramètre de modèle du modèle initial afin d'obtenir une caractéristique d'image de la deuxième image échantillon ; et

le traitement de la caractéristique d'image de la deuxième image échantillon sur la base du premier paramètre de traitement d'image afin d'obtenir la troisième position.

6. Procédé selon l'une des revendications 3 à 5,
dans lequel l'obtention de la troisième position de la cible sélectionnée dans la deuxième image échantillon sur la base de la première position de la cible sélectionnée dans la première image échantillon, de la première image échantillon et de la deuxième image échantillon comprend :

la génération de premières informations d'indication de position de la première image échantillon sur la base de la première position, dans lequel les premières informations d'indication de position indiquent une position sélectionnée de la cible sélectionnée dans la première image échantillon ; et
l'obtention d'informations d'indication de position de la deuxième image échantillon sur la base des premières informations d'indication de position, de la première image échantillon et de la deuxième image échantillon, dans lequel les informations d'indication de position de la deuxième image échantillon indiquent une position prédite de la cible sélectionnée dans la deuxième image échantillon,
dans lequel l'obtention de la deuxième position de la cible sélectionnée dans la première image échantillon sur la base de la troisième position de la cible sélectionnée dans la deuxième image échantillon, de la première image échantillon et de la deuxième image échantillon comprend :
l'obtention de deuxièmes informations d'indication de position de la première image échantillon sur la base des informations d'indication de position de la deuxième image échantillon, de la première image échantillon et de la deuxième image échantillon, dans lequel les deuxièmes informations d'indication de position indiquent une position prédite de la cible sélectionnée dans la première image échantillon.

7. Procédé selon la revendication 3, dans lequel la pluralité de trames d'images échantillons comprend une pluralité d'ensembles d'images d'échantillons, chacun de la pluralité d'ensembles d'images d'échantillons comprend une trame de première image échantillon et au moins une trame de deuxième image échantillon, et correspond à une valeur d'erreur ;
dans lequel l'ajustement d'un paramètre de modèle du modèle initial sur la base de la valeur d'erreur comprend :
pour une quantité cible d'ensembles d'images échantillons de la pluralité d'ensembles d'images d'échantillons, l'ajustement du paramètre de modèle du modèle initial sur la base d'une pluralité de valeurs d'erreur correspondant à la quantité cible d'ensembles d'images échantillons.

8. Procédé selon la revendication 7, dans lequel l'ajustement du paramètre de modèle du modèle initial sur la base d'une pluralité de valeurs d'erreur correspondant à la quantité cible d'ensembles d'images échantillons comprend :

la suppression des valeurs d'erreur remplissant une condition de valeur d'erreur de la pluralité de valeurs d'erreur correspondant à la quantité cible d'ensembles d'images échantillons ; et l'ajustement du paramètre de modèle du modèle initial sur la base des valeurs d'erreur restantes ; ou
la détermination de premières pondérations pour la pluralité de valeurs d'erreur correspondant à la quantité cible d'ensembles d'images échantillons ; et l'ajustement du paramètre de modèle du modèle initial sur la base des premières pondérations de la pluralité de valeurs d'erreur et de la pluralité de valeurs d'erreur, dans lequel les premières pondérations de valeurs d'erreur satisfaisant à la condition de valeur d'erreur dans la pluralité de valeurs d'erreur sont nulles.

9. Procédé selon la revendication 7 ou 8, dans lequel chaque ensemble d'images échantillons correspond à une deuxième pondération ;
dans lequel l'ajustement du paramètre de modèle du modèle initial sur la base d'une pluralité de valeurs d'erreur correspondant à la quantité cible d'ensembles d'images échantillons comprend :

l'obtention d'une deuxième pondération pour une valeur d'erreur de chaque ensemble d'images échantillons, dans lequel la deuxième pondération est corrélée positivement avec un déplacement de la cible sélectionnée dans chaque ensemble d'images échantillons de la pluralité de trames d'images échantillons ; et
l'ajustement du paramètre de modèle du modèle initial sur la base de la pluralité de valeurs d'erreur correspondant à la quantité cible d'ensembles d'images échantillons et d'une pluralité de deuxièmes pondérations.

10. Appareil pour obtenir une position d'une cible, comprenant :

un module d'obtention d'images (901), configuré pour obtenir une pluralité de trames d'images, dans lequel une première image de la pluralité de trames d'images comprend une cible à détecter, la première image est une

**EP 3 968 223 B1**

trame d'image quelconque de la pluralité de trames d'images ;

un module d'invocation de modèle (902), configuré pour invoquer un modèle d'obtention de position, dans lequel un paramètre de modèle du modèle d'obtention de position est obtenu par apprentissage sur la base d'une première position d'une cible sélectionnée dans une première image échantillon d'une pluralité de trames d'images échantillons et d'une deuxième position de la cible sélectionnée dans la première image échantillon, la deuxième position est prédite sur la base d'une troisième position de la cible sélectionnée dans une deuxième image échantillon de la pluralité de trames d'images échantillons, la troisième position est prédite sur la base de la première position, la cible sélectionnée est sélectionnée de manière aléatoire dans la première image échantillon, la deuxième image échantillon est différente de la première image échantillon de la pluralité de trames d'images échantillons ; et

un module d'obtention de position (903), configuré pour déterminer une position de la cible à détecter dans une deuxième image sur la base du paramètre de modèle et d'une position de la cible à détecter dans la première image en utilisant le modèle d'obtention de position, dans lequel la deuxième image est différente de la première image de la pluralité de trames d'images,

dans lequel la détermination d'une position de la cible à détecter dans la deuxième image sur la base du paramètre de modèle et d'une position de la cible à détecter dans la première image en utilisant le modèle d'obtention de position comprend :

l'obtention d'un paramètre de traitement d'image sur la base de la position de la cible à détecter dans la première image, de la première image et du paramètre de modèle ; et

le traitement de la deuxième image sur la base du paramètre de traitement d'image afin de délivrer la position de la cible à détecter dans la deuxième image,

**caractérisé en ce que** l'obtention d'un paramètre de traitement d'image sur la base de la position de la cible à détecter dans la première image, de la première image et du paramètre de modèle comprend :

la génération d'informations d'indication de position correspondant à la première image sur la base de la position de la cible à détecter dans la première image, dans lequel les informations d'indication de position correspondant à la première image indiquent une position sélectionnée de la cible à détecter dans la première image ; et

l'obtention d'un paramètre de traitement d'image sur la base des informations d'indication de position de la première image, de la première image et du paramètre de modèle ;

dans lequel le traitement de la deuxième image sur la base du paramètre de traitement d'image afin de délivrer la position de la cible à détecter dans la deuxième image comprend :

le traitement de la deuxième image sur la base du paramètre de traitement d'image pour délivrer des informations d'indication de position de la deuxième image, dans lequel les informations d'indication de position de la deuxième image indiquent une position prédite de la cible à détecter dans la deuxième image.

11. Dispositif informatique comprenant : un ou plusieurs processeurs ; et une ou plusieurs mémoires stockant au moins une instruction, dans lequel l'instruction est chargée et exécutée par les un ou plusieurs processeurs pour mettre en œuvre les opérations du procédé pour obtenir une position d'une cible selon l'une des revendications 1 à 9.

12. Support de stockage lisible par ordinateur stockant au moins une instruction, dans lequel l'instruction est chargée et exécutée par un processeur pour mettre en œuvre les opérations du procédé pour obtenir une position d'une cible selon l'une des revendications 1 à 9.

**Figure 1**

201

A computer device obtains multiple frames of sample images

202

The computer device invokes an initial model, and randomly selects a target area in a first sample image in the multiple frames of sample images as a selected target according to the initial model

203

The initial model in the computer device obtains a third position of the selected target in a second sample image based on a first position of the selected target in the first sample image, the first sample image and the second sample image

204

The initial model in the computer device obtains a second position of the selected target in the first sample image based on the third position of the selected target in the second sample image, the first sample image and the second sample image

205

The computer device obtains an error value of the second position relative to the first position based on the first position and the second position of the selected target in the first sample image

206

The computer device adjusts a model parameter of the initial model based on the error value until a target condition is met, to obtain a position obtaining model

**Figure 2**

Unlabeled video sequence          Template or search image block

**Figure 3**

Training data

**Figure 4**

(a) Unsupervised learning motivation

(b) Schematic diagram of unsupervised learning based on a dual-path network

**Figure 5**

Template
image block

Search image
block

Template
image block

Search
image
block #1

#1

#2

#1

#2

#3

Search
image
block #2

Success by coincidence

Error accumulation
caused by multiple frames

**Figure 6**

```
┌──────────────────────────────────────────────────┐  ── 701
│   A computer device obtains multiple frames of images │
└──────────────────────────────────────────────────┘
                        │
                        ▼
┌──────────────────────────────────────────────────┐  ── 702
│   The computer device invokes a position obtaining model │
└──────────────────────────────────────────────────┘
                        │
                        ▼
┌──────────────────────────────────────────────────┐  ── 703
│ The computer device processes, by using the position obtaining model, │
│ a second image based on a model parameter of the position obtaining   │
│   model and a position of a to-be-detected target in a first image, to │
│   output a position of the to-be-detected target in the second image   │
└──────────────────────────────────────────────────┘
```

**Figure 7**

| A computer device obtains multiple frames of sample images | 801 |

$\downarrow$

| The computer device invokes an initial model; obtains, based on a first position of a selected target in a first sample image in the multiple frames of sample images according to the initial model, a third position of the selected target in a second sample image; obtains a second position of the selected target in the first sample image based on the third position of the selected target in the second sample image; and adjusts a model parameter of the initial model based on the first position and the second position, to obtain a position obtaining model | 802 |

$\downarrow$

| The computer device invokes the position obtaining model when multiple frames of images are obtained, and determines positions of a to-be-detected target in the multiple frames of images according to the position obtaining model | 803 |

**Figure 8**

Apparatus for obtaining a position of a target

| Image obtaining module | 901 |

| Model invoking module | 902 |

| Position obtaining module | 903 |

**Figure 9**

**Figure 10**

1100

Peripheral interface 1103

Radio frequency circuit 1104

Display screen 1105

Processor 1101

Camera component 1106

Audio circuit 1107

Memory 1102

Positioning component 1108

Power supply 1109

| Acceleration sensor 1111 | Gyroscope sensor 1112 | Pressure sensor 1113 |
|---|---|---|
| Fingerprint sensor 1114 | Optical sensor 1115 | Proximity sensor 1116 |

Sensor 1110

**Figure 11**

1200

Server

Processor 1201

Memory 1202

**Figure 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017078886 A1
- CN 109635657 A
- CN 109584276 A
- CN 107492113 A